(19) **Europäisches Patentamt / European Patent Office / Office européen des brevets**

(11) **EP 1 947 710 A1**

(12) **EUROPEAN PATENT APPLICATION**
published in accordance with Art. 158(3) EPC

(43) Date of publication:
**23.07.2008 Bulletin 2008/30**

(51) Int Cl.:
*H01M 2/16* (2006.01)   *H01M 4/02* (2006.01)
*H01M 4/48* (2006.01)   *H01M 4/58* (2006.01)
*H01M 4/62* (2006.01)   *H01M 10/40* (2006.01)

(21) Application number: **06798109.2**

(22) Date of filing: **19.09.2006**

(86) International application number:
**PCT/JP2006/318498**

(87) International publication number:
**WO 2007/037145 (05.04.2007 Gazette 2007/14)**

(84) Designated Contracting States:
**AT BE BG CH CY CZ DE DK EE ES FI FR GB GR HU IE IS IT LI LT LU LV MC NL PL PT RO SE SI SK TR**

(30) Priority: 29.09.2005  JP 2005285278
29.09.2005  JP 2005285279
02.08.2006  JP 2006211008
02.08.2006  JP 2006211009

(71) Applicant: **Sanyo Electric Co., Ltd.**
**Osaka 570-8677 (JP)**

(72) Inventors:
• **BABA, Yasunori**
**Kobe-shi, Hyogo 6512109 (JP)**

• **IMACHI, Naoki**
**Kobe-shi, Hyogo 6512273 (JP)**
• **SIBUTANI, Yuko**
**Osaka 5860004 (JP)**
• **MIKAMI, Akira**
**Kobe-shi, Hyogo 6512108 (JP)**
• **FUJIMOTO, Hiroyuki**
**Kobe-shi, Hyogo 6530014 (JP)**
• **MATSUTA, Shigeki**
**Kobe-shi, Hyogo 6512275 (JP)**
• **FUJITANI, Shin**
**Kobe-shi, Hyogo 6512109 (JP)**

(74) Representative: **Glawe, Delfs, Moll**
**Patentanwälte**
**Postfach 26 01 62**
**80058 München (DE)**

(54) **POSITIVE ELECTRODE FOR NONAQUEOUS ELECTROLYTE BATTERY, NEGATIVE ELECTRODE FOR NONAQUEOUS ELECTROLYTE BATTERY, SEPARATOR FOR NONAQUEOUS ELECTROLYTE BATTERY, AND NONAQUEOUS ELECTROLYTE BATTERY USING THOSE**

(57)     The present invention provides a non-aqueous electrolyte battery, etc. that can reduce the manufacturing cost of the battery, meet the need for increased battery capacity, and at the same time improve various battery characteristics, such as high-rate charge-discharge capability, high-temperature cycle performance, and storage performance.

A porous layer (32) is disposed between a separator and a negative electrode (13). The porous layer has a non-aqueous electrolyte permeability higher than that in TD of the separator. An excess electrolyte is contained in at least a portion of an internal space of a battery case that is other than an electrode assembly, and the excess electrolyte and at least a portion of the porous layer are in contact with each other.

FIG. 7

**Description**

[TECHNICAL FIELD]

The present invention relates to non-aqueous electrolyte batteries, such as lithium-ion batteries and polymer batteries, and electrodes for the non-aqueous electrolyte batteries. More particularly, the invention relates to , for example, a battery structure that is excellent in battery performance relating to electrolyte permeability (such as cycle performance, storage performance, and safety) and that exhibits high reliability even with a battery design that features high capacity and high power.

[BACKGROUND ART]

Mobile information terminal devices such as mobile telephones, notebook computers, and PDAs have become smaller and lighter at a rapid pace in recent years. This has led to a demand for higher capacity batteries as the drive power source for the mobile information terminal devices. With their high energy density and high capacity, non-aqueous electrolyte batteries that perform charge and discharge by transferring lithium ions between the positive and negative electrodes have been widely used as the driving power source for the mobile information terminal devices. However, the non-aqueous electrolyte batteries have not yet satisfied the requirements sufficiently.
Moreover, utilizing their characteristics, applications of non-aqueous electrolyte batteries, especially Li-ion batteries, have recently been broadened to middle-sized and large-sized batteries for power tools, electric automobiles, hybrid automobiles, etc., as well as mobile applications such as mobile telephones. As a consequence, demands for increased battery safety have been on the rise, along with demands for increased capacity and higher output power.
Under these circumstances, efforts have been underway to reduce the thicknesses of the battery components that do not directly involved in power generation or in increasing of the filling density of electrode materials, such as current collectors, separators, or battery cases (see, for example, Patent Reference 1) in order to achieve higher battery capacity. In addition, attempts have been made to increase electrode areas or the like in order to increase the output power of the batteries. Consequently, problems in battery design that pertain to permeation and retention of electrolyte in the electrode have become more evident than they were at the early stage of the lithium-ion battery development. To resolve these problems, it has been necessary to establish a novel battery design for ensuring battery performance and reliability.
[Patent Reference 1] Japanese Published Unexamined Patent Application No. 2002-141042

[DISCLOSURE OF THE INVENTION]

[PROBLEMS TO BE SOLVED BY THE INVENTION]

An example of the conventional battery design is such that the battery comprises an electrode assembly in which the positive electrode and the negative electrode are disposed opposite each other across a separator. For example, when the electrode assembly is a wound type electrode assembly, permeation and diffusion of the electrolyte into the electrode assembly are believed to take place through the following three paths.

  (1) gaps within the electrodes
  (2) pores in the separator
  (3) gaps between the separator and the electrodes

The just-mentioned paths cannot sufficiently serve the role of the permeation and diffusion paths for the electrolyte for the following reasons.

- The reason why path (1) cannot sufficiently serve the role of the permeation and diffusion paths for the electrolyte

As described above, the filling density of the active material has tended to be higher in the batteries in recent years in order to achieve higher battery capacity, and as a consequence, the gaps within the electrodes have tended to decrease.

- The reason why path (2) cannot sufficiently serve the role of the permeation and diffusion paths for the electrolyte

The electrolyte absorbing capability of the currently-used polyolefin-based separators along the electrode winding width direction (TD or transverse direction) is very slow due to the limitations in the manufacturing method. Moreover, the pores in separators have tended to decrease because of the separator thickness reduction due to the requirement for higher capacity in recent years.

- The reason why path (3) cannot sufficiently serve the role of the permeation and diffusion paths for the electrolyte

In recent years, in the batteries employing wound electrode assemblies, the tension in the electrode assemblies has tended to be higher because, for example, the winding tension has tended to be increased. Therefore, the gaps between the electrodes and the separators are narrower, making the permeation and diffusion of the electrolyte difficult.

At an early stage of battery assembling, a decompression process and a compression process are carried out during the manufacturing process. Thus, permeation of the electrolyte into the electrodes can be ensured to a certain degree by optimizing the conditions of those processes. When the electrolyte in the battery is consumed by performing the charge-discharge cycle repeatedly or storing the battery for a long period of time, the charge-discharge reactions need to be guaranteed by the electrolyte that is filled in the electrodes and that retained by the separator originally. However, because of the reduction in separator thickness and the increase in the amount of the active material applied as described above, it is not sufficient to guarantee the charge-discharge reactions only with the just-mentioned electrolyte, and the battery performance deterioration due to electrolyte shortage tends to accelerate more and more.

In addition, lithium cobalt oxide and graphite materials, used as the material for constructing the battery, show such behavior that they expand during charge and shrink during discharge. The expansion and shrinkage of the negative electrode is especially great. When these materials are used as electrode materials, battery swelling is minimized by the buffer action of thinning (shrinkage) of the separator against the expansion during charge. The gap space within the electrodes decreases from the initial stage of battery assembling (discharged state) to a charge stage and consequently the electrolyte is released from the electrodes. The electrolyte is absorbed in the pores in the separator, and the electrolyte that cannot be absorbed is released outside the electrode assembly system. When the separator does not retain an amount of electrolyte that equates the amount of electrolyte absorbed and released by the electrode plates during charge and discharge and when the amount of electrolyte becomes insufficient because the electrolyte is consumed by the side reactions on the electrodes, the separator in the conventional battery has poor permeability along the TD (permeation direction of electrolyte) and therefore the electrolyte released outside the electrode assembly system cannot easily permeate in the entire separator quickly in the conventional battery. For this reason, the electrolyte tends to dry out in the wound electrode assembly, leading to the problems such as deterioration of the charge-discharge performance. This trend is particularly evident in the test environments in which the electrolyte tends to be consumed by side reactions, such as in high-temperature cycle tests and storage tests, and in the test environments in which the speed of the electrolyte absorption by the electrodes changes rapidly, such as in high-rate charging and discharging.

Moreover, when the electrode width is increased to obtain higher capacity and higher power of the battery, the electrolyte permeability to the central portions of the electrode plates becomes particularly poor. This necessitates the need for aging for a long time to ensure electrolyte permeability not only during the charge-discharge cycles but also at the initial stage of assembling, which increases the manufacturing cost of the battery. Thus, in order to shorten the manufacturing process of the battery, it is necessary to provide reliable permeation and diffusion paths that enable smooth permeation and diffusion of the electrolyte into the electrodes, and moreover, in order to improve various characteristics of the battery, it is essential to reliably provide the electrolyte in an amount that meets the amount required by the amount of the active materials in the positive and negative electrodes.

In recent years, there has been proposed a technique that achieves an increased battery capacity and an increased battery power by charging the positive electrode to 4.40 V or higher versus the potential of the lithium reference electrode. However, when the positive electrode is charged to 4.40 V or higher versus the potential of the lithium reference electrode, the cycle performance deteriorates considerably.

In the case that the above-described battery design is employed, the expansion-shrinkage ratio of the negative electrode remains unchanged when compared to the conventional case where the positive electrode is charged to 4.30 V versus the lithium reference electrode potential because the charge depth of the negative electrode is not changed; however, the expansion-shrinkage ratio of the electrodes as a whole increases because the positive electrode expands further when the charge potential becomes higher. Thus, by charging the positive electrode to 4.40 V or higher versus the potential of the lithium reference electrode, the expansion and shrinkage of the electrodes become greater, so the amount of the electrolyte in the separator becomes insufficient. Moreover, such a high potential causes the electrolyte to undergo oxidative decomposition easily in the positive electrode, and the amount of the electrolyte in the electrodes becomes insufficient considerably. For these reasons, the charge-discharge performance deteriorates significantly.

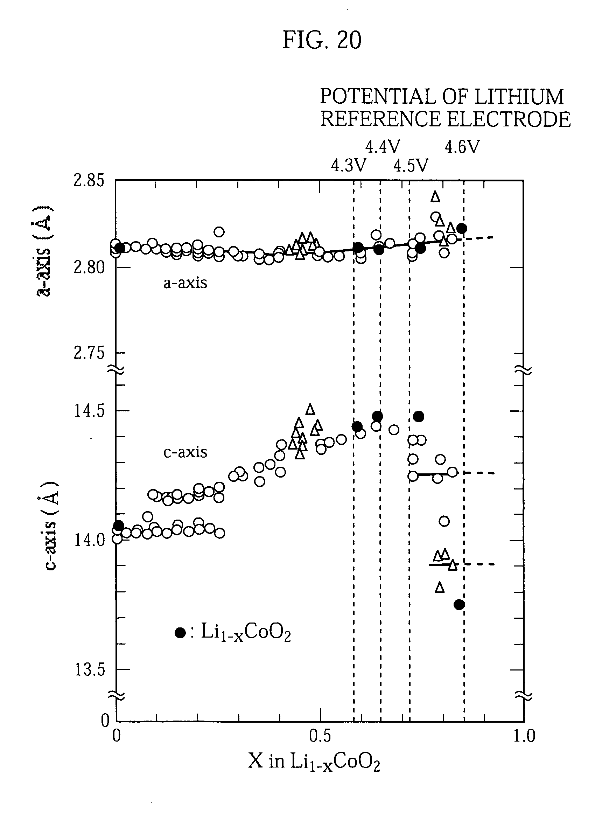

The above-described expansion and shrinkage of the electrodes when using lithium cobalt oxide for the positive electrode will be described briefly with reference to Fig. 20 [reference: T. Ozuku et.al, J. Electrochem. Soc. Vol. 141, 2972 (1994)]. As will be clearly seen from Fig. 20, when the positive electrode is charged to 4.40 V to 4.50 V or higher versus the potential of the lithium reference electrode (i.e., 4.30 V to 4.40 V or higher, since the battery voltage is about 0.1 V lower than the potential of the lithium reference electrode), the crystal lattice constant along the a-axis undergoes little change, while the crystal lattice constant along the c-axis increases. Thus, while the positive electrode expands further and the expansion-shrinkage ratio of the positive electrode during charge and discharge becomes higher, the expansion ratio of the negative electrode does not change. For this reason, the amount of electrolyte that permeates and diffuses into the positive electrode increases, while the amount of electrolyte that permeates and diffuses into the negative electrode decreases (this is believed to be due to the fact that the positive electrode has better electrolyte dispersibility and electrolyte absorbency, as will be shown in the preliminary experiment 3 in the following examples). As a result, the charge-discharge battery performance deteriorates significantly because of the electrolyte shortage in the negative electrode.

Among the battery designs proposed in the past, no patent applications that focuses on this point is seen, and the technique of increasing the pores in the separator and the technique of increasing the separator thickness to reliably provide its buffer action and the amount of electrolyte retained therein are commonly known. A problem with such techniques, however, is that since the separator, which is a component that is not directly involved in generating electric power, occupies a large volume in the battery, the need for an increased battery capacity cannot be fulfilled.

Accordingly, it is an object of the present invention to provide a non-aqueous electrolyte battery and an electrode for a non-aqueous electrolyte battery that can reduce the manufacturing cost of the battery, meet the need for increased battery capacity, and at the same time improve various battery characteristics, such as high-rate charge-discharge capability, high-temperature cycle performance, and storage performance.

[MEANS FOR SOLVING THE PROBLEMS]

In order to accomplish the foregoing object, the present invention provides a non-aqueous electrolyte battery comprising: an electrode assembly comprising a positive electrode having a positive electrode active material layer, a negative electrode having a negative electrode active material layer, and a separator interposed between the electrodes; a non-aqueous electrolyte that is supplied to the electrode assembly; and a battery case for accommodating the electrode assembly and the non-aqueous electrolyte, wherein the separator has two directional properties, one of which being MD and the other one being TD having a less non-aqueous electrolyte permeability than that in the MD, and the non-aqueous electrolyte is supplied to the electrode assembly primarily along the TD, the non-aqueous electrolyte battery characterized in that: a porous layer is disposed between the separator and at least one electrode of the positive and negative electrodes, the porous layer having a non-aqueous electrolyte permeability higher than that in the TD; an excess electrolyte is contained in at least a portion of the battery case internal space that is other than the electrode assembly; and the excess electrolyte and at least a portion of the porous layer are in contact with each other.

When the porous layer having a non-aqueous electrolyte permeability higher than that in the TD of the separator is provided between the separator and at least one electrode of the positive and negative electrodes as in the above-described configuration, the permeation and diffusion paths for the non-aqueous electrolyte that allow the non-aqueous electrolyte to permeate and diffuse smoothly can be reliably provided because of the presence of the porous layer. Therefore, even when the gap space within the electrodes is reduced due to the charge operation and the non-aqueous electrolyte that cannot be absorbed in the pores of the separator is released outside the electrode assembly system, the non-aqueous electrolyte that has been released outside the electrode assembly system is allowed to permeate in the entire separator quickly and supplied to the electrodes. As a result, the non-aqueous electrolyte can be infiltrated into the electrodes in a short time, so the charge-discharge performance can be prevented from deteriorating. In particular, the high-rate charge-discharge capability, in which the speed of absorption of the non-aqueous electrolyte by the electrodes changes rapidly, can be inhibited from deteriorating dramatically.

In addition, excess electrolyte is contained in at least a portion of the battery case internal space that is other than the electrode assembly, and the excess electrolyte and at least a portion of the porous layer are in contact with each other. Therefore, the excess electrolyte permeates into the porous layer so that it can be supplied to the electrodes quickly even when the non-aqueous electrolyte has been consumed within the battery due to repeated charge-discharge cycles or a long-term storage of the battery and consequently sufficient charge-discharge reactions become no longer possible by the non-aqueous electrolyte originally held within the electrodes and the non-aqueous electrolyte retained by the separator. In this respect as well, the charge-discharge performance is prevented from deteriorating. In particular, the battery characteristics such as high-temperature cycle performance and storage performance, which tend to be strongly affected by the consumption of the non-aqueous electrolyte due to side reactions, can be prevented from deteriorating dramatically.

Moreover, even when the electrode width is increased to obtain higher capacity and higher power of the battery, the non-electrolyte permeability to the central portions of the electrode plates is excellent because of the presence of the porous layer. As a result, sufficient non-aqueous electrolyte permeability can be ensured even at the initial stage of assembling as well as during the charge-discharge cycles, so the need for performing aging for a long time is eliminated, and thereby the manufacturing cost of the battery can be reduced.

Furthermore, permeation and diffusion paths for the non-aqueous electrolyte that allow the non-aqueous electrolyte to permeate and diffuse smoothly can be provided reliably without using the technique of increasing the pores in the separator or the technique of increasing the separator thickness to ensure the amount of electrolyte retained and the buffer action; therefore, the volume occupied by the separator, which is a component that is not directly involved in electric power generation, does not increase. As a result, an increased battery capacity can be achieved. In the past, it was difficult to reduce the film thickness of the separator for the reason that the cycle performance and the like deteriorate when the amount of the non-aqueous electrolyte that can be retained in the separator is too small. By forming the porous layer as in the present invention, however, it becomes possible to reliably provide supply paths for the non-aqueous electrolyte. Therefore, the amount of the non-aqueous electrolyte that needs to be retained in the separator can be reduced, and as a result, a separator thickness reduction, i.e., an increased battery capacity can be made possible. It might seem, however, that although the separator thickness is reduced, the increased battery capacity can be insufficient because the additional porous layer is necessary. Nevertheless, it should be noted that in the configuration of the present invention, the thickness of the porous layer is insignificantly small while the separator thickness can be significantly reduced, so the volume occupied by the components that is not directly involved in electric power generation reduces as a whole. Accordingly, an increased battery capacity is achieved as described above.

Although it has been mentioned that the porous layer should have a non-aqueous electrolyte permeability higher than at least that in the TD of the separator, it is desirable that in the batteries employing a stacked type electrode assembly or the like, the porous layer should have a higher non-aqueous electrolyte permeability than not only in the TD but also in the MD. The reason is that in the batteries employing a stacked type electrode assembly or the like, the non-aqueous electrolyte infiltrates not only from the TD but also from the MD (i.e., from four directions) unlike the batteries employing a wound electrode assembly, so the use of a porous layer having a higher non-aqueous electrolyte permeability than that in the MD of the separator makes permeation and diffusion of the non-aqueous electrolyte more smooth.

The term "MD" is an abbreviation for the machine direction (the machine direction) and the term "TD" is an abbreviation for the transverse direction (the cross direction).

The term "excess electrolyte" is meant to include not only the non-aqueous electrolyte that has been present initially within the battery case other than the electrode assembly since the fabrication of the battery but also the non-aqueous electrolyte released from the electrode assembly by the expansion of the electrodes. In other words, the term "excess electrolyte" is intended to mean, irrespective of the condition of the battery, the entire non-aqueous electrolyte released outside the electrode assembly system.

Additionally, Japanese Published Unexamined Patent Application Nos. 10-6453, 10-324758, 2000-100408, and 2001-266949, for example, report that a microporous polyamide layer is formed on a separator for the purpose of improving the heat resistance. In addition, Japanese Patent 3371301, Japanese Published Unexamined Patent Application Nos. 7-20135, 11-102730, and 2005-174792, for example, report that a microporous layer is formed on an electrode for the purpose of preventing internal short circuits. Nevertheless, all of these proposals focus on the safety, that is, prevention of the short circuit between the positive and negative electrodes associated with shrinkage of the separator at high temperatures by providing a resin layer or the like, and none of them mention the specification for optimizing the battery structure in terms of permeation and diffusion paths for non-aqueous electrolyte. In other words, the foregoing publications do not describe that a porous layer having a higher non-aqueous electrolyte permeability than that in the TD of the separator, nor that excess electrolyte is provided within the battery case. For these reasons, the present invention and the foregoing publications are completely different in configuration, action, and effect.

It is desirable that the porous layer be formed on at least one surface of the separator, or on a surface of at least one of the electrodes of the positive and negative electrodes.

It is sufficient that the porous layer is formed between the separator and at least one of the electrodes of the positive and negative electrodes (i.e., the porous layer may be formed separately from the separator and the positive and negative electrodes) as described above, but when the porous layer is formed on at least one surface of the separator or on a surface of at least one of the electrodes of the positive and negative electrodes, the productivity of the battery improves because it becomes unnecessary to perform, in fabricating the battery, the position-matching process between the porous layer and the separator or between the porous layer and the positive and negative electrodes.

It is desirable that the electrode assembly be a wound electrode assembly in which the positive and negative electrodes and the separator are wound together.

In recent years, in the batteries employing wound electrode assemblies, the tension in the electrode assemblies has tended to be higher because, for example, the winding tension has tended to be increased, and consequently, the non-aqueous electrolyte is difficult to permeate and diffuse. Therefore, when the present invention is applied to such a battery, the above-described advantageous effects are exhibited further.

It is desirable that the battery case have a cylindrical shape or a prismatic shape.

The batteries in which the battery case has a cylindrical or prismatic shape can benefit more from the above-described advantageous effects because they have more excess space than those with a thin-type battery case such as laminate batteries and correspondingly they can contain a large amount of excess electrolyte.

It is desirable that the porous layer comprise a binder and inorganic-material-based microparticles comprising at least one substance selected from the group consisting of alumina and titania.

When using these materials, it is possible to reliably provide appropriate space (gap) that can ensure permeation of the non-aqueous electrolyte since the porous layer is constituted by non-oriented substances that are in microparticle state. Moreover, these materials are impervious to quality degradation in the battery because they have high mechanical strength and high thermal stability.

It should be noted however that it is also possible to use not only alumina and/or titania but also other ceramic materials such as zirconia.

It is desirable that the porous layer comprise at least one resinous material selected from the group consisting of polyamide and polyamideimide.

When using these materials, it is possible to reliably provide appropriate space (gap) that can ensure permeation of the non-aqueous electrolyte since the porous layer is constituted by non-oriented fibrous substances. Moreover, these materials are impervious to quality degradation in the battery because they have high mechanical strength and high thermal stability.

It should be noted however that it is also possible to use not only polyamide and/or polyamideimide but also polyimide or the like.

It is preferable that, when the positive electrode is charged to 4.40 V or higher versus the potential of the lithium reference electrode, the porous layer be formed on a surface of the electrode having a greater volumetric change ratio during charge and discharge.

The restriction is made that the positive electrode is charged to 4.40 V or higher versus the potential of the lithium reference electrode because the presence of the porous layer makes a significant difference in the storage performance and the cycle performance at high temperatures for the battery in which the positive electrode is charged to 4.40 V or higher versus the potential of the lithium reference electrode, although the presence of the porous layer can make a difference in the cycle performance at high temperatures and the like sufficiently even in the battery in which the positive electrode is charged to less than 4.40 V versus the potential of the lithium reference electrode. In the battery in which the positive electrode is charged to 4.45 V or higher, or to 4.50 V or higher, such a difference emerges more significantly. In addition, the reason why the porous layer should be formed on a surface of the electrode having a greater volumetric change ratio during charge and discharge is as follows. The need for absorbing the non-aqueous electrolyte from the separator and supplementing the non-aqueous electrolyte into the electrode plates because of the shrinkage due to discharge is greater in the electrode having a greater volumetric change ratio during charge and discharge. Therefore, the above-described advantageous effects are exhibited more significantly when the porous layer is provided on the surface of the electrode having a greater volumetric change ratio during charge and discharge.

The just-mentioned electrode having a greater volumetric change ratio during charge and discharge is the negative electrode.

The reason is that although various negative electrode active materials are used in non-aqueous electrolyte batteries, the volumetric change ratio of the negative electrode is generally greater than that of the positive electrode.

It is desirable that the negative electrode active material layer comprise a negative electrode active material comprising graphite as a main component.

When graphite is used as a negative electrode active material, the negative electrode has a greater volumetric change ratio during charge and discharge than the positive electrode in many cases. Thus, the above-described advantageous effects are exhibited further by forming the porous layer between the negative electrode and the separator.

It should be noted that the phrase "comprising graphite as a main component" means that graphite is contained in an amount of 50 mass % or greater.

It is desirable that the porous layer be also disposed between the positive electrode and the separator.

When the end-of-charge voltage is 4.40 V or higher, not only does the amount of the non-aqueous electrolyte in the negative electrode become insufficient, but also the expansion-shrinkage ratio in the positive electrode increases due to the higher charge potential of the positive electrode. At the same time, the non-aqueous electrolyte is consumed at a very rapid pace due to oxidative decomposition of the non-aqueous electrolyte since the charged state of the positive electrode is in a further higher region, so the shortage of the non-aqueous electrolyte in the positive electrode is further exacerbated. For this reason, by disposing the porous layer not only between the negative electrode and the separator but also between the positive electrode and the separator as described above, desired cycle performance can be obtained.

It is desirable that, when the positive electrode is charged to 4.40 V or higher versus the potential of the lithium reference electrode, the porous layer is formed on a surface of the separator, the surface corresponding to the electrode having a greater volumetric change ratio during charge and discharge.

The restriction is made that the positive electrode is charged to 4.40 V or higher versus the potential of the lithium reference electrode for the same reason as stated in the foregoing case that the porous layer is formed on the surface of the electrode having a greater volumetric change ratio during charge and discharge. In addition, the porous layer is formed on the separator surface that corresponds to the electrode having a greater volumetric change ratio during charge and discharge because the same advantageous effects as in the case of forming the porous layer on the surface of the electrode having a greater volumetric change ratio during charge and discharge can be obtained.

Furthermore, in this case as well, it is desirable that the electrode having a greater volumetric change ratio during charge and discharge be the negative electrode, that the negative electrode active material layer comprises a negative electrode active material comprising graphite as a main component, and that the porous layer is disposed between the positive electrode and the separator, for the same reasons as stated above.

It is desirable that the positive electrode active material layer comprise a positive electrode active material containing at least lithium cobalt oxide containing aluminum or magnesium in solid solution, and zirconium be firmly adhered to the surface of the lithium cobalt oxide.

The reason for employing such a configuration is as follows. In the case of using lithium cobalt oxide as the positive electrode active material, as the charge depth increases, the crystal structure becomes more unstable and the deterioration accelerates in a high temperature atmosphere. In view of this problem, aluminum or magnesium is contained in the positive electrode active material (inside the crystals) in the form of solid solution so that crystal strain in the positive electrode can be alleviated. Although these elements serve to stabilize the crystal structure greatly, they may lead to poor initial charge-discharge efficiency and poor discharge working voltage. In order to alleviate this problem, zirconia is caused to adhere firmly to the surface of lithium cobalt oxide.

If such an improvement, in which different kinds of elements are contained in the form of solid solution or firmly adhered, is not made to the positive electrode active material, the positive electrode active material deteriorates considerably at high temperatures when the positive electrode is charged to 4.4 V or higher versus the potential of the lithium reference electrode, and the battery does not operate properly. This makes the evaluation of battery performance itself difficult, and it is difficult to verify the effect of the porous layer sufficiently. For this reason, in order to verify the effect of the porous layer sufficiently, it is necessary to use the positive electrode active material that has been improved so that it can operate stably as a battery even under high temperature and high voltage conditions as described above. This makes it possible to assess the effect of the porous layer sufficiently.

The invention also provides a negative electrode for a non-aqueous electrolyte battery, disposed opposite a positive electrode across a separator having two directional properties, one of which being MD and the other one of which being TD having a less non-aqueous electrolyte permeability than that in the MD, wherein the non-aqueous electrolyte permeates primarily along the TD, the negative electrode characterized in that: a porous layer having a higher non-aqueous electrolyte permeability that in the TD is formed on a surface thereof.

When the porous layer having a non-aqueous electrolyte permeability higher than that in the TD of the separator is formed on a surface of the negative electrode as in the above-described configuration, the permeation and diffusion paths for the non-aqueous electrolyte that allow the non-aqueous electrolyte to permeate and diffuse smoothly can be reliably provided because of the presence of the porous layer. Therefore, even when the gap space within the electrodes is reduced due to the charge operation and the non-aqueous electrolyte that cannot be absorbed in the pores of the separator is released outside the electrode assembly system, the non-aqueous electrolyte that has been released outside the electrode assembly system is allowed to permeate in the entire separator quickly and supplied to the electrodes (especially to the negative electrode). As a result, the non-aqueous electrolyte can be infiltrated into the electrodes in a short time, so the charge-discharge performance can be prevented from deteriorating. In particular, the high-rate charge-discharge capability, in which the speed of absorption of the non-aqueous electrolyte by the electrodes changes rapidly, can be inhibited from deteriorating dramatically.

The invention also provides a positive electrode for a non-aqueous electrolyte battery, disposed opposite a negative electrode across a separator having two directional properties, one of which being MD and the other one of which being TD having a less non-aqueous electrolyte permeability than that in the MD, wherein the non-aqueous electrolyte permeates primarily along the TD, the positive electrode characterized in that: a porous layer having a higher non-aqueous electrolyte permeability that in the TD is formed on a surface thereof.

When the porous layer having a non-aqueous electrolyte permeability higher than that in the TD of the separator is formed on a surface of the positive electrode as in the above-described configuration, the permeation and diffusion paths for the non-aqueous electrolyte that allow the non-aqueous electrolyte to permeate and diffuse smoothly can be reliably provided because of the presence of the porous layer. Therefore, even when the gap space within the electrodes is reduced due to the charge operation and the non-aqueous electrolyte that cannot be absorbed in the pores of the separator is released outside the electrode assembly system, the non-aqueous electrolyte that has been released outside the electrode assembly system is allowed to permeate in the entire separator quickly and supplied to the electrodes (especially to the positive electrode). As a result, the non-aqueous electrolyte can be infiltrated into the electrodes in a short time, so the charge-discharge performance can be prevented from deteriorating. In particular, the high-rate charge-discharge capability, in which the speed of absorption of the non-aqueous electrolyte by the electrodes changes rapidly, can be inhibited from deteriorating dramatically.

The invention also provides a separator for a non-aqueous electrolyte battery, disposed between a positive electrode and a negative electrode, the separator having two directional properties, one of which being MD and the other one of which being TD having a less non-aqueous electrolyte permeability than that in the MD, wherein the non-aqueous electrolyte permeates primarily along the TD, the separator characterized in that: the separator comprises an olefinic polymer, and a porous layer having a higher non-aqueous electrolyte permeability that in the TD is formed on a surface of at least one side thereof.

When the porous layer having a non-aqueous electrolyte permeability higher than that in the TD of the separator is formed on a surface of at least one side of the separator as in the above-described configuration, the permeation and diffusion paths for the non-aqueous electrolyte that allow the non-aqueous electrolyte to permeate and diffuse smoothly can be reliably provided because of the presence of the porous layer. Therefore, even when the gap space within the electrodes is reduced due to the charge operation and the non-aqueous electrolyte that cannot be absorbed in the pores of the separator is released outside the electrode assembly system, the non-aqueous electrolyte that has been released outside the electrode assembly system is allowed to permeate in the entire separator quickly and supplied to the electrodes (especially to the electrode facing the side on which the porous layer is disposed). As a result, the non-aqueous electrolyte can be infiltrated into the electrodes in a short time, so the charge-discharge performance can be prevented from deteriorating. In particular, the high-rate charge-discharge capability, in which the speed of absorption of the non-aqueous electrolyte by the electrodes changes rapidly, can be inhibited from deteriorating dramatically.

It is desirable that the porous layer be formed on both sides of the separator.

Such a configuration allows the non-aqueous electrolyte to be supplied to both the electrodes smoothly. Therefore, deteriorations of high-rate charge-discharge capability and so forth can be hindered more effectively.

[ADVANTAGES OF THE INVENTION]

According to the present invention, novel permeation and diffusion paths for the non-aqueous electrolyte are formed by the porous layer, and excess electrolyte that can be supplied to the interior of the electrode assembly is reliably provided outside the electrode assembly. Thereby, shortage of the non-aqueous electrolyte is prevented when the non-aqueous electrolyte is consumed due to high-temperature charge-discharge cycles and high-temperature storage, and the battery performance can be maintained even under a harsh environment. Conventionally, when the amount of electrolyte retained by the separator does not match the amount of the active material applied and the filling density of the active material, the cycle life deterioration tends to be caused easily, so the separator thickness reduction has been difficult. In contrast, according to the present invention, very fast permeation and diffusion speed of the non-aqueous electrolyte is achieved by the capillary action of the porous layer according to the present invention, much buffer portion of the separator is not needed, and the non-aqueous electrolyte can be provided quickly from outside the electrode assembly to both the positive and negative electrodes. Therefore, an increased battery capacity and an increased battery power can be accomplished easily.

Moreover, because of the feature originating from capillary action, permeation and diffusion speed of the non-aqueous electrolyte is fast even in the assembling process of the battery, and as a result, the manufacturing process becomes short, making it possible to reduce manufacturing costs. Furthermore, since the non-aqueous electrolyte can be spread sufficiently over the entire electrodes, it is possible to enhance uniformity in the charge-discharge performance, and all the battery performance such as cycle, storage, and safety performance.

In addition, even when the positive electrode is charged to 4.40 V or higher versus the potential of the lithium reference electrode, the non-aqueous electrolyte shortage originating from the expansion of the electrodes and oxidative decomposition of the non-aqueous electrolyte can be prevented, and therefore, stable charge-discharge battery performance can be maintained.

[BEST MODE FOR CARRYING OUT THE INVENTION]

Hereinbelow, the present invention is described in further detail based on certain embodiments and examples thereof. It should be construed, however, that the present invention is not limited to the following embodiments and examples, but various changes and modifications are possible without departing from the scope of the invention.

[Preparation of Positive Electrode]

First, lithium cobalt oxide (hereinafter also abbreviated as "LCO"), used as a positive electrode active material, and SP300 and acetylene black (hereinafter also abbreviated as "AB"), used as carbon conductive agents, were mixed together at a mass ratio of 92 : 3 : 2 to prepare a positive electrode mixture powder. Next, 200g of the resultant powder was put into a mixer (for example, a mechanofusion system AM-15F made by Hosokawa Micron Corp.), and the mixer was operated at a rate of 1,500 rpm for 10 minutes to cause compression, shock, and shear actions while mixing, to thus prepare a positive electrode active material mixture. Subsequently, the resultant positive electrode active material mixture and a fluoropolymer-based binder agent (PVDF) were mixed at a mass ratio of 97 : 3 in an N-methyl-2-pyrrolidone (NMP) solvent to prepare a positive electrode slurry. Thereafter, the positive electrode slurry was applied onto both sides of an aluminum foil serving as a positive electrode current collector, and the resultant material was then dried and pressure-rolled. Thus, a positive electrode was prepared.

[Preparation of Negative Electrode]

A carbon material (graphite), CMC (carboxymethylcellulose sodium), and SBR (styrene-butadiene rubber) were mixed in an aqueous solution at a mass ratio of 98 : 1 : 1 to prepare a negative electrode slurry. Thereafter, the negative electrode slurry was applied onto both sides of a copper foil serving as a negative electrode current collector, and the resultant material was then dried and pressure-rolled. Thus, a negative electrode was prepared.

[Preparation of Non-aqueous Electrolyte]

A lithium salt composed of $LiPF_6$ was dissolved at a concentration of 1.0 mole/L in a mixed solvent of 3 : 7 volume ratio of ethylene carbonate (EC) and diethyl carbonate (DEC) to prepare a non-aqueous electrolyte. The amount of the non-aqueous electrolyte was set at about 2.5 cc, taking into consideration that excess electrolyte is included in addition to the amount of the electrolyte necessary for charge and discharge.

[Preparation of Porous Layer on the Surface of Separator]

A porous layer (thickness: 4 $\mu$m) made of polyamide (hereinafter also abbreviated as "PA") was formed on one side of a separator made of a polyethylene (hereinafter also abbreviated as "PE") microporous film (thickness: 12 $\mu$m) in the following manner. It should be noted that the separator had a porosity of 50%.
First, a source material for PA was dissolved in a water-soluble polarity solvent (NMP solution), and low-temperature condensation polymerization was conducted to prepare a polyamide-doped solution. This was applied onto a surface of one side of a microporous PE film, serving as the substrate material (separator) and dipped in an aqueous solution to extract the solvent, whereby a resin-layered separator was prepared. When extracting the solvent, the heat resistant material (PA) does not dissolve in the aqueous solution, and it deposits and solidifies on the substrate material, which may be formed into micropores. Moreover, in this method, the number and size of the porous film may be adjusted by the solution concentration of the polyamide-doped solution.

[Construction of Battery]

Respective lead terminals were attached to the positive and negative electrodes, and the positive and negative electrodes were wound in a spiral form with a separator interposed therebetween. The wound electrodes were then pressed into a flat shape to obtain an electrode assembly, and the prepared electrode assembly was placed into a space made by an aluminum laminate film serving as a battery case. Then, the non-aqueous electrolyte was filled into the space, and thereafter the battery case was sealed by welding the aluminum laminate film together, to thus prepare a battery.
It should be noted that the porous layer is disposed in contact with the negative electrode in the battery. In addition, excess electrolyte is contained in a portion of the location of the internal space of the battery case, made of an aluminum laminate film, that is other than the electrode assembly, and the excess electrolyte and at least a portion of the porous layer are in contact with each other. The above-described battery had a design capacity of 780 mAh.

[EMBODIMENTS]

[PRELIMINARY EXPERIMENT 1]

The condition of electrolyte impregnation in the wound electrode assembly was observed by varying the conditions of filling the electrolyte into the battery (i.e., without carrying out compression or decompression after filling the electrolyte) to evaluate the condition of permeation and diffusion of the electrolyte in an actual battery. The results are shown in Table 1.

(Battery Used)

The battery that was used to carry out this experiment had the same configuration as described in the "Best Mode for Carrying out the Invention" (hereinafter simply referred to as the "best mode") above, except that the battery was a 18650-type cylindrical battery (in which the maximum height of the wound electrode assembly is 59.5 mm and the wound electrode assembly is a cylindrical shape, unlike a laminate battery in which the wound electrode assembly is in a flat shape) and that it used the positive electrode and the separator as described below. It should be noted that each of the electrodes uses a high filling density type electrode that is incorporated in cylindrical batteries that are currently in the market. Specifically, the amount of the positive electrode active material applied is 532 mg/10 cm$^2$, and the filling density of the positive electrode active material is 3.57 g/cc. The amount of the negative electrode active material applied is 225 mg/10 cm$^2$, and the filling density of the negative electrode active material is 1.67 g/cc.

- Positive Electrode

The positive electrode was prepared in the same manner as described in the best mode, except that SP300 as the carbon conductive agent was not used and the mass ratio of LCO, AB, and PVDF was set at 94 : 3 : 3.

- Separator

A commonly-used microporous PE film (thickness: 23 μm, porosity: 48%) was used.

(Specific Details of the Experiments)

[1] Batteries that were in an intermediate stage of the electrolyte impregnation during the manufacturing process were disassembled, and the permeation conditions of the electrolyte into the electrodes were confirmed.
[2] Subsequently, one end of the wound electrode assembly was immersed in the electrolyte (the liquid level of the electrolyte was 7 mm), and the permeation condition of the electrolyte (comparison of the height of the electrolyte absorbed into the electrode etc.) was observed.
In the innermost portion and the outermost portion, the winding tension is weak due to battery design constraints and gaps exist, so it is difficult to determine real measurement values because of the electrolyte that moves along the gaps. For this reason, when conducting the experiment described in [2], the electrolyte absorption height was measured at a position 20 cm away from an end of the outermost portion of the electrodes (i.e., in the vicinity of the central portion with respect to the length of the sheet-shaped electrode) after disassembling the battery to make comparison.

(Results of the Experiment)

Results of Experiment [1]

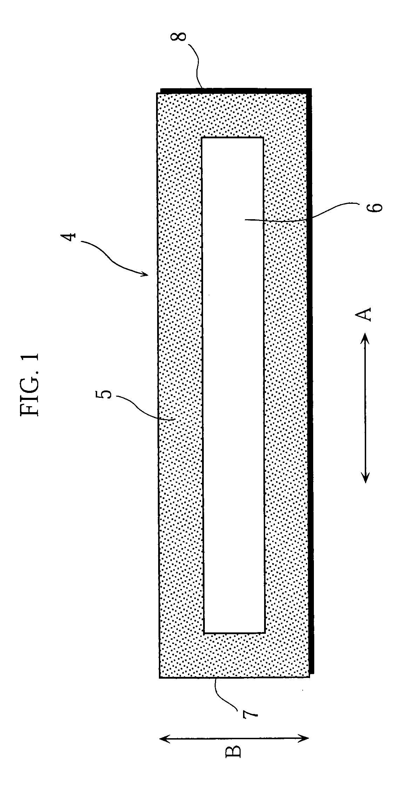

It is observed that in a wound electrode assembly 4, as illustrated in Fig. 1 (which is a view showing a wound electrode assembly 4 developed, in which A denotes a longitudinal direction and B denotes a transverse direction), an electrolyte 5 permeates from the top and bottom ends simultaneously toward the inside of the wound electrode assembly 4 along the transverse directions B (winding vertical directions) after impregnating the electrolyte, and an electrolyte non-permeating portion 6 exists at the center of the wound electrode assembly 4. It should be noted that in the outermost end portion 7 and the innermost end portion 8, the winding tension is weak and therefore permeation and diffusion of the electrolyte along the longitudinal direction A are observed in part, but these permeation and diffusion are not the primary diffusion and the like.
Therefore, in the wound electrode assembly 4, it is necessary to ensure sufficient electrolyte permeability along the transverse directions B.
It should be noted that the same test was conducted also for prismatic batteries and laminate-type batteries, and substantially the same tendency was observed.

Results of Experiment [2]

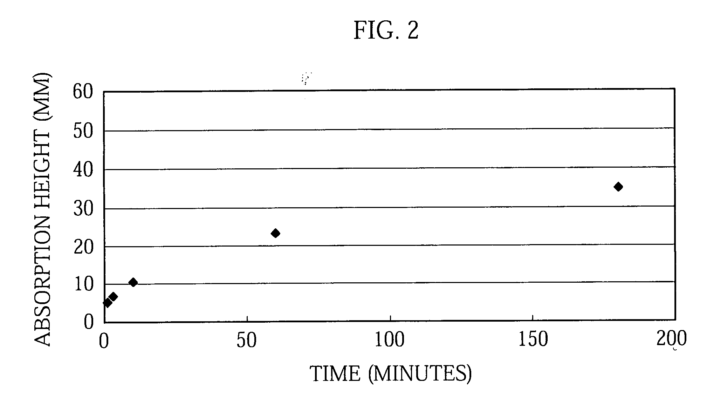

As is clear from Table 1 and Fig. 2, even after a lapse of 180 minutes, the permeation height is 35.0 mm, which is roughly the half of the height of the wound electrode assembly (59.5 mm), although the height increases over time. Thus, it is understood that the permeation condition of the electrolyte is considerably slow.
TABLE 1

| Elapsed time (min.) | 1 | 3 | 10 | 60 | 180 |
|---|---|---|---|---|---|
| Absorption height (mm) | 5.0 | 6.5 | 10.2 | 23.0 | 35.0 |
| *The maximum height of the wound electrode assembly was 59.5 mm (in the separator portion). | | | | | |

In the actual manufacturing of the battery, it is possible to accelerate the permeation of the electrolyte into the wound electrode assembly by such techniques as decompression and compression, and the problem of slow permeation and diffusion of the electrolyte itself is not particularly a serious problem. However, if a reaction such that the electrolyte is consumed occurs within the wound electrode assembly when using the battery, it is necessary to supply additional electrolyte from the outside of the wound electrode assembly, in addition to the electrolyte impregnated in the wound electrode assembly at the initial stage. In this case, the problems as will be described later arise because the techniques such as decompression and compression cannot be used and the speed is believed to be very slow from the results of the experiment.

[PRELIMINARY EXPERIMENT 2]

Bearing in mind the results of the electrolyte permeation in the cylindrical electrode assembly shown in the preliminary experiment 1, a comparison was made about the electrolyte absorption conditions for the electrolyte in separators, for the purpose of identifying permeation and diffusion paths of the electrolyte. Specifically, an electrolyte absorbency evaluation and an air permeability measurement for separators were carried out.

Separators Used

The separators used in this experiment were: PE separators (one with a large pore size and one with a small pore size), a layered separator of PP(polypropylene)/PE/PP (in which PP film/PE film/PP film were bonded by thermocompression bonding), and a porous resin coated separator in which a porous layer made of PA was formed on a PE separator (the same separator as the one shown in the foregoing best mode). The separators were cut into a shape having a width of 1.5 cm and a length of 5.0 cm to make the evaluations.

(Specific Details of the Experiments)

[1] Measurement of Air Permeability of Separators

This measurement was carried out according to JIS P8117, and the measurement equipment used was a B-type Gurley densometer (made by Toyo Seiki Seisaku-sho, Ltd.).
Specifically, a sample was fastened to a circular hole (diameter: 28.6 mm, area: 645 mm$^2$) of the inner cylinder (mass: 567 g), and the air (100 cc) in the outer cylinder was passed through the circular hole of the test cylinder to the outside of the cylinder. The time it took for the air (100 cc) in the outer cylinder to pass through the separator was measured, and the value obtained was employed as the air permeability of the sample.

[2] Electrolyte absorbency Evaluation of Separators

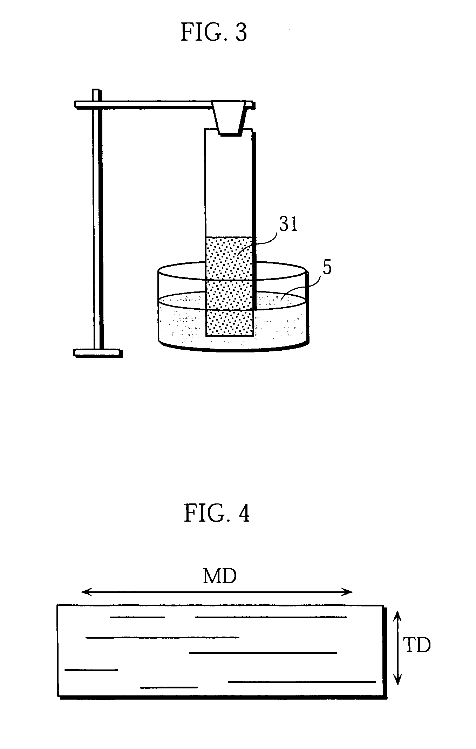

Generally, there is a drawing process in the manufacturing of separators, and there exist MD (machine direction) and TD (transverse direction: cross direction) because of the manufacturing process. Usually, when winding a sheet-shaped electrode assembly, a longitudinal direction of the separator corresponds to MD, while the width direction corresponds to TD. Accordingly, in the case of using a wound electrode assembly for a battery, the electrolyte permeates primarily from the top and bottom portions of the wound electrode assembly because of the battery structure, so it is necessary that the separator have a high electrolyte absorbency along TD.
For the purpose of evaluating the physical properties, as illustrated in Fig. 3, one end of a separator 31 was immersed in the electrolyte 5, used in the best mode, and 10 minutes later, the absorption height of the electrolyte was compared. In the process of assembling the batteries, a separator thickness decrease is observed due to the stretching relating to the winding tension in the case of cylindrical batteries, and a thickness decrease due to hot pressing in the winding and pressing step in the cases of prismatic batteries and laminate batteries. To simulate these situations, pressing conditions were calculated from the actual measurement values of the thickness changes in the separators of cylindrical batteries and the thickness changes in the separators of prismatic batteries. Further, the conditions of the separators in actual batteries were also simulated, and the same evaluation test was conducted for the separators after pressing. A sheet having an area of $80 \times 170$ mm$^2$ and pressed according to the following pressing conditions was used as the separator after pressing. This makes it possible to reproduce a separator in substantially the same conditions as the separator in a prismatic battery.

- Pressing conditions

Pressure: 15MPa
Temperature: 50°C
Duration: 15 seconds

(Results of the Experiments)

TABLE 2

| Separator type | | PE with large pore size (Sample 1) | | PE with large pore size (Sample 2) | | PE with large pore size (Sample 3) | |
|---|---|---|---|---|---|---|---|
| Before pressing process | Thickness ($\mu$m) | 18 | | 23 | | 27 | |
| | Air permeability (s/100cc) | 100 | | 102 | | 108 | |
| | Direction | MD | TD | MD | TD | MD | TD |
| | Height of absorbed electrolyte (mm) | 5.0 | 2.0 | 6.5 | 2.5 | 5.0 | 5.0 |
| After pressing process | Thickness ($\mu$m) | 14 | | 16 | | 18 | |
| | Air permeability (s/100 cc) | 331 | | 327 | | 337 | |
| | Direction | MD | TD | MD | TD | MD | TD |
| | Height of absorbed electrolyte (mm) | 2.6 | 1.0 | 3.0 | 1.0 | 3.0 | 4.0 |

TABLE 3

| Separator type | | PE with small pore size (Sample 4) | | PP/PE/PP layered film (Sample 5) | | *PA/PE layered film (Sample 6)* | |
|---|---|---|---|---|---|---|---|
| Before pressing process | Thickness (μm) | 16 | | 25 | | **16** | |
| | Air permeability (s/100 cc) | 177 | | 504 | | *230* | |
| | Direction | MD | TD | MD | TD | *MD* | *TD* |
| | Height of absorbed electrolyte (mm) | 4.0 | 2.0 | 0.5 | 1.0 | *17.0* | *14.0* |
| After pressing process | Thickness (μm) | 12 | | 23 | | **13** | |
| | Air permeability (s/100 cc) | 284 | | 734 | | *384* | |
| | Direction | MD | TD | MD | TD | *MD* | *TD* |
| | Height of absorbed electrolyte (mm) | 2.5 | 1.5 | 0.5 | 0.5 | *15.0* | *14.0* |
| *The data of the one applicable to the present invention (Sample 6) are indicated by bold italics. | | | | | | | |

Results of Experiment [1]

As clearly seen from Tables 2 and 3, the air permeability decreased (i.e., the air permeation time became longer) after the pressing process compared to that before the pressing process in all the samples 1 to 6. In particular, the air permeability considerably decreased in the PE separators with a large pore size, samples 1 to 3.

Results of Experiment [2]

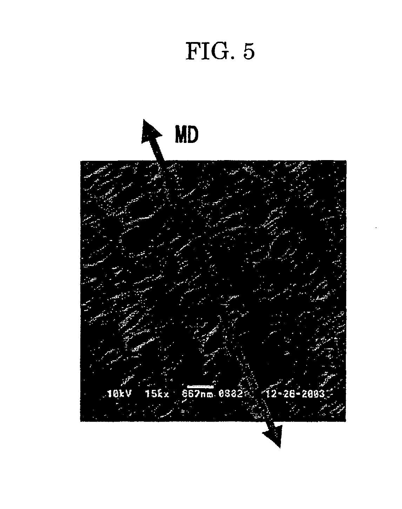

As clearly seen from Tables 2 and 3, it is observed that samples 1 to 4 show relatively high electrolyte absorbencies along MD but low electrolyte absorbencies along TD (i.e., relatively high electrolyte absorption heights along MD but small electrolyte absorption heights along TD in Tables 2 and 3). The reason is believed to be as follows. As illustrated in Figs. 4 and 5, in a fibrous polyolefin (polyethylene), olefin fibers have a structure that tends to expand easily along MD because of the drawing process, and as a result, the polymer fibers tend to align along MD. Therefore, the fibrous polyolefin serves like a wall along TD, preventing permeation and diffusion of the electrolyte.

In addition, in samples 1 to 4, the pore portion of the separator decreases because of the pressing, permeation and diffusion of the electrolyte become more difficult to occur after the pressing, further decreasing the electrolyte absorbency along TD. It is believed that there is little dependence between the separator thickness and the electrolyte absorbency.

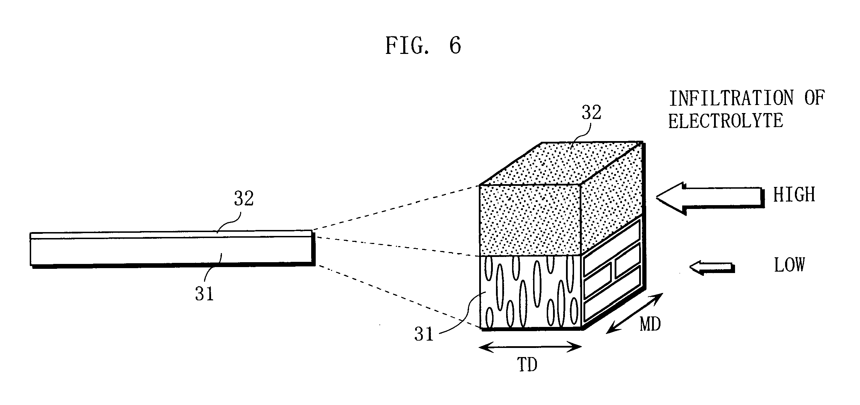

In contrast, sample 6, in which the porous layer made of a polyamide resin is provided on the surface of the separator made of a microporous polyolefin film, showed improvements in electrolyte absorbency along both MD and TD over samples 1 to 4. As illustrated in Fig. 6 (in Fig. 6, reference numeral 31 denotes a separator and reference numeral 32 denotes a porous layer), since the porous layer 32 is formed to have a non-oriented porous structure because of the manufacturing method, the permeation and diffusion of the electrolyte are superior to those in the separator 31, irrelevant to MD and TD. In particular, it can improve the electrolyte absorbency along TD, which has a poor electrolyte absorbency in the separator 31. Therefore, the electrolyte absorbency for the electrolyte improves dramatically in the wound electrode assembly in which the winding direction and MD are the same.

Moreover, since the resin of this type has higher strength and more resistant to crush than olefin, it causes almost no decrease in the electrolyte absorption height for the electrolyte even after the pressing. Therefore, in order to improve the electrolyte absorbency for the electrolyte, it is believed effective to provide a porous layer on the separator to help the permeation and diffusion by utilizing capillary action.

It should be noted that sample 5 shows poor electrolyte absorbency along both MD and TD, irrelevant to before or after the pressing.

[PRELIMINARY EXPERIMENT 3]

Bearing in mind the results of permeation of the electrolyte in the cylindrical electrode assembly, shown in the preliminary experiment 1, a comparison was made about electrolyte absorption conditions for the electrolyte in electrodes, for the purpose of identifying permeation and diffusion paths of the electrolyte.

(Electrodes Used)

The electrodes used here were the same electrodes (positive electrode and negative electrode, samples 11 and 12 in Table 4) as described in the preliminary experiment 1 (the electrodes for 18650 cylindrical battery) and the negative electrodes having a porous layer formed thereon (samples 13 to 15 in Table 4). The electrodes have a width of 1.5 cm and a length of 5.0 cm.

The porous layer was prepared in the following manner. First, titania (TiO$_2$, average particle size 31 nm) and PVDF were mixed at a mass ratio of 95 : 5, and thereafter, NMP was used as the solvent to prepare a slurry in which the viscosity was controlled. Next, the slurry was coated onto the surface of the negative electrode by doctor blading and then dried (sample 13 in Table 4). The thickness of the negative electrode thus prepared was 6 $\mu$m. In addition, negative electrodes were prepared in the same manner as described above, except that titania (average particle size 500 nm) or alumina (average particle size 200 nm) was used in place of the titania (average particle size 31 nm). (The former is sample 14 in Table 4, in which the thickness of the negative electrode is 40 $\mu$m, and the latter is sample 15 in Table 4, in which the thickness of the negative electrode is 6 $\mu$m.)

(Specific Details of the Experiment)

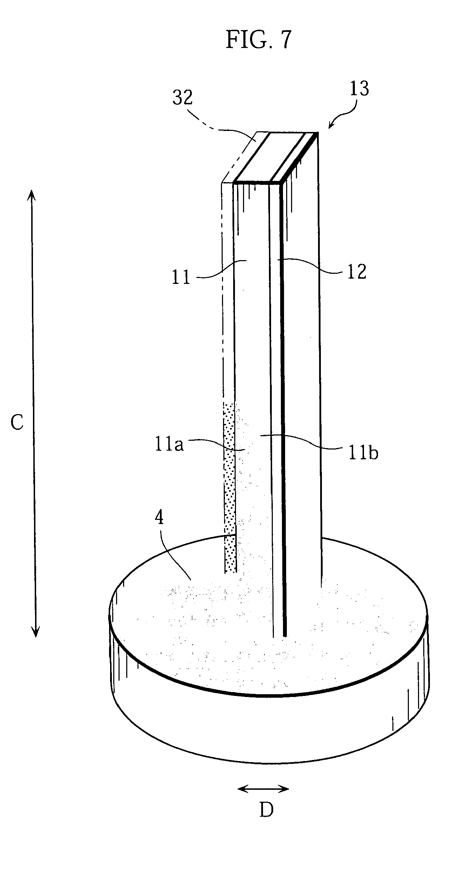

The experiment was conducted in the same manner as the electrolyte absorbency evaluation for separators described in [2] of the preliminary experiment 1. Specifically, as illustrated in Fig. 7, an electrode 13 (positive electrode or negative electrode) having an active material layer 11 and a current collector 12 was immersed in the electrolyte used in the best mode, and the absorption height of the electrolyte 5 was determined at each predetermined time. In each of samples 13 to 15, a porous layer 32 was formed on a surface of the active material layer 11.

(Results of the Experiment)

TABLE 4

| Electrode | Positive electrode | Negative electrode | | |
|---|---|---|---|---|
| Porous layer | Not provided (Sample 11) | Not provided (Sample 12) | *6 $\mu$m(Sample 13)* | *40 $\mu$m (Sample 14)* | *6 $\mu$m (Sample 15)* |
| Particles of porous layer (Material, particle size) | - | - | *Titania, 31 nm* | *Titania, 500 nm* | *Alumina, 200 nm* |

(continued)

| Electrode | | Positive electrode | Negative electrode | | | |
|---|---|---|---|---|---|---|
| Porous layer | | Not provided (Sample 11) | Not provided (Sample 12) | *6 μm(Sample 13)* | *40 μm (Sample 14)* | *6 μm (Sample 15)* |
| Height of absorbed electrolyte (mm) | 1 minute later | 1 | 0 | *4* | *4* | *4* |
| | 5 minutes later | 5 | 1 | *20* | *19* | *21* |
| | 10 minutes later | 7 | 2 | *28* | *-* | *-* |
| | 50 minutes later | 20 | 10 | *40* | *37* | *39* |
| *The data of those applicable to the present invention (Samples 13, 14 and 15) are indicated by bold italics. | | | | | | |

As clearly seen from Tables 2, 3, and 4, the electrodes show the same or rather higher level of electrolyte absorbency compared to the separators.

Accordingly, how the electrolyte permeates and diffuses in the electrodes has been investigated. The results are demonstrated with reference to Fig. 7.

Specifically, under the assumption that the active material layer 11 in which the electrolyte 5 has permeated tends to peel off from the current collector 12 easily, peeling manipulation was carried out by pressing the portion of the active material layer 11 in which the electrolyte 5 permeated. As a result, it was observed that most of the active material layer 11 peeled off from the current collector 12 in the portion that was immersed in the electrolyte 5 and in the vicinity thereof, but the active material layer 11b near the current collector 12 did not peel off although the active material layer 11 a near the surface peeled off in the vicinity of the central portion (in the vicinity of the upper end of the portion in which the electrolyte permeated). From the result, it is believed that the electrolyte 5 does not permeate or diffuse from the interior of the electrode 13 (active material layer 11), but it permeates and diffuses along the gap on the surface of the electrode 13 by capillary action.

Specifically, it is believed that the permeation height of the electrolyte 5 near the current collector 12 is smaller than the permeation height of the electrolyte 5 on the electrode surface because the electrolyte 5 permeates and diffuses along the surface of the electrode 13 in the height direction of the electrode (direction C in the figure) and at the same time gradually permeates and diffuses in the thickness direction of the electrode (direction D in the figure). Note that it has been confirmed that the wettability of the surface of the electrode 13 is dependent on the gaps and the surface irregularities of the electrode plate.

In addition, as clearly seen from Table 4, it is observed that the positive electrode tends to show better electrolyte absorbency in comparing the positive electrode (sample 11) and the negative electrode (sample 12). The reason is believed to be as follows. Generally, the negative electrode becomes a mirror surface body easily because carbon particle, the negative electrode active material, tends to be crashed, not fractured, so it has a less irregular surface in that sense and capillary action does not occur easily. On the other hand, the positive electrode active materials, such as lithium cobalt oxide, lithium manganese oxide, lithium nickel oxide, and olivine-type lithium phosphate, have a smaller particle size than that of the negative electrode active material. Consequently, when a force is applied thereto, the particles fracture so that the stress is scattered, and therefore, surface irregularities tend to remain relatively easily.

Furthermore, that the electrolyte absorbency tends to improve dramatically in the cases where the porous layer is provided on the surface of an electrode (negative electrode) (i.e., in the cases of samples 13 to 15), compared to the case where the porous layer is not provided (sample 12).

The reason is believed to be that, due to capillary action, the electrolyte 5 permeates and diffuses through the porous layer quickly in the height direction of the electrode (direction C in the figure) while it permeates and diffuses slowly in the thickness direction of the electrode (direction D in the figure).

In the above-described results, differences in the type and size of the particles used and the thickness of the porous layer did not particularly result in differences in electrolyte absorbency. From this result, it is considered that the advantageous effects of the present invention can be exhibited as long as the porous layer has gaps, and if so, it is assumed that the material for the porous layer is not limited to alumina and titania mentioned above but may be any material as long as it can form a porous layer. However, the material needs to be stable electrically and chemically; for example, it should not adversely affect the charge-discharge reactions in the battery. In that sense, it is believed preferable to use particles of an inorganic material as such alumina, titania, and zirconia, particles of an organic material such as polyamide, polyimide, and polyamideimide, or a porous material thereof. In some cases, active materials such as lithium cobalt oxide and carbon may be used. However, from cost considerations, alumina and titania are particularly preferable.

Although formation of the porous layer on the positive electrode is not studied because a PVDF-based binder is used in the present preliminary experiment 3, the improvements in electrolyte absorbency on the positive electrode by capillary action can be expected likewise by optimizing the selection of binder and solvent as will be shown in the following third, sixth, and seventh embodiments. Specifically, when the electrode active material layer is applied with an NMP-based solvent, it is preferable to use a water-based solvent for the porous layer, whereas when the electrode active material layer is applied with a water-based solvent, it is preferable to use an NMP-based solvent for the porous layer. It is believed possible to use the same solvent system depending on the formation conditions of the porous layer.

It is preferable that the porous layer be formed by a technique such as spraying, gravure coating , die coating, ink jetting, and dip coating, but as long as it is possible to form a thin film, other techniques may be used. There is no particular restriction on the thickness of the porous layer, but as long as it is within the range in which capillary action can work effectively, problems will not arise. When an increased battery capacity is desired, the thickness should be 5 $\mu$m or less, preferably 3 $\mu$m or less. Moreover, the filling rate of the porous layer may be any value as long as it results in a higher electrolyte absorbency than the electrode used as the substrate material under the conditions of the present experiment, although it may depend on the size or type of particles.

[PRELIMINARY EXPERIMENT 4]

Bearing in mind the results of the preliminary experiment 3, a comparison was made about permeation speed of the electrolyte along the electrode inward direction (i.e., the electrode thickness direction), for the purpose of identifying permeation and diffusion paths of the electrolyte.

(Electrode Used)

The same electrodes as described in the preliminary experiment 1 (electrodes for 18650 cylindrical battery) were used.

(Specific Details of the Experiment)

The electrolyte was dropped onto the electrode surface, and the liquid drop disappearance time was measured. The results are shown in Table 5. For the electrolyte, only PC (3 $\mu$L) was used since the electrolyte described in the best mode contained a highly volatile chain carbonate (DEC).

(Results of the Experiment)

TABLE 5

| Electrode | Positive electrode | | Negative electrode | |
|---|---|---|---|---|
| Filling density (g/cc) | 3.57 | 3.65 | 1.66 | 1.80 |
| Liquid drop disappearance time (sec.) | 60 | 151 | 200 | 615 |
| *Electrodes for 18650 cylindrical battery were used. | | | | |

As clearly seen from Table 5, the higher the filling density is, the slower the permeation speed of electrolyte into the electrode plate in both positive and negative electrodes. In particular, it is observed that the electrolyte absorbency of the negative electrode extremely lowers when the filling density is increased to a certain density or higher, since the negative electrode surface tends to become a mirror surface easily as described above. In this sense, it may be regarded that the negative electrode generally has a slower electrolyte absorption speed than the positive electrode. It should be noted that this characteristic may depend on the design philosophy and balance of the battery and therefore can vary depending on the type of battery. Nevertheless, it is believed that the positive electrode has better electrolyte absorbency at the level of currently commercialized batteries.

(Summary of the Preliminary Experiments 3 and 4)

As seen from the preliminary experiment 3, the permeation speed of electrolyte along the electrode height direction is faster in the positive electrode, and the permeation speed of electrolyte along the electrode thickness is also faster in the positive electrode. From the results, it is believed that the positive electrode is likely to be superior in electrolyte absorbency of electrolyte to the negative electrode.

Here, bearing the results of the preliminary experiments 1 to 4 in mind, actual batteries were fabricated, and experiments were conducted for the batteries. The results are shown in the following.

FIRST EMBODIMENT

(Example 1)

A battery prepared in the manner described in the foregoing best mode was used for Example 1.
The battery fabricated in this manner is hereinafter referred to as Battery A1 of the invention.

(Example 2)

A battery was fabricated in the same manner as described in Example 1 above, except that a separator having a thickness of 12 $\mu$m and a porosity of 41% was used as the separator and that the porous layer was disposed on the surface of the positive electrode side of the separator.
The battery fabricated in this manner is hereinafter referred to as Battery A2 of the invention.

(Comparative Example 1)

A battery was fabricated in the same manner as described in Example 1 above, except that no porous layer was formed on the surface of the negative electrode side of the separator.
The battery fabricated in this manner is hereinafter referred to as Comparative Battery Z1.

(Comparative Example 2)

A battery was fabricated in the same manner as described in Example 2 above, except that no porous layer was formed on the surface of the positive electrode side of the separator.
The battery fabricated in this manner is hereinafter referred to as Comparative Battery Z2.

Table 6 below shows the summary of the configurations of Batteries A1 and A2 of the invention as well as Comparative Batteries Z1 and Z2.

TABLE 6

| Battery | Battery shape | Separator | | | Porous layer | | | | End-of-charge voltage (Positive electrode potential vs. lithium reference electrode potential) (V) |
|---|---|---|---|---|---|---|---|---|---|
| | | Material | Thickness (μm) | Porosity (%) | Provision of porous layer | Type | Thickness (μm) | Location | |
| A1 | Laminate type | PE | 16 | 50 | Yes | Resin (PA) | 4 | Surface of negative electrode side of separator | 4.20 (4.30) |
| Z1 | | | | | No | - | - | - | |
| A2 | | | 12 | 41 | Yes | Resin (PA) | 4 | Surface of positive electrode side of separator | |
| Z2 | | | | | No | - | - | - | |

(Experiment)

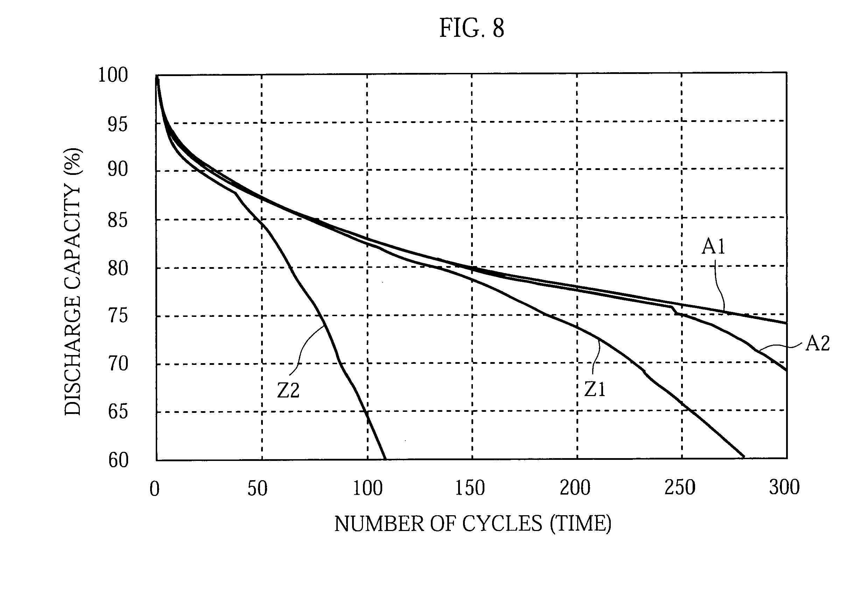

The cycle performance was determined for Batteries A1 and A2 as well as Comparative Batteries Z1 and Z2. The results are shown in Fig. 8. The charge-discharge conditions were as follows.

[Charge-discharge Conditions]

- Charge conditions

Each of the batteries was charged at a constant current of 1.0 It (750 mA) until the battery voltage reached 4.20 V, and thereafter charged at a voltage of 4.20 V until the current value reached 1/20 It (37.5 mA).

- Discharge conditions

Each of the batteries was discharged at a constant current of 1.0 It (750 mA) until the battery voltage reached 2.75 V.
The interval between the charge and the discharge was 10 minutes, and the charge-discharge temperature was 60°C.
As clearly seen from Fig. 8, it is demonstrated that Batteries A1 and A2 of the invention are superior in cycle performance at 60°C (hereinafter also simply referred to as "cycle performance ") to Comparative Batteries Z1 and Z2. In addition, when Batteries A1 and A2 of the invention are compared, Battery A1 of the invention is superior in cycle performance to Battery A2 of the invention. Further, when Comparative Batteries Z1 and Z2 are compared, Comparative Battery Z1 is superior in cycle performance to Comparative Battery Z2. Each of the reasons will be discussed below.

(1) The reason why Comparative Batteries Z1 and Z2 are inferior in cycle performance to Batteries A1 and A2 of the invention.

- The reason why Comparative Batteries Z1 and Z2 are inferior in cycle performance

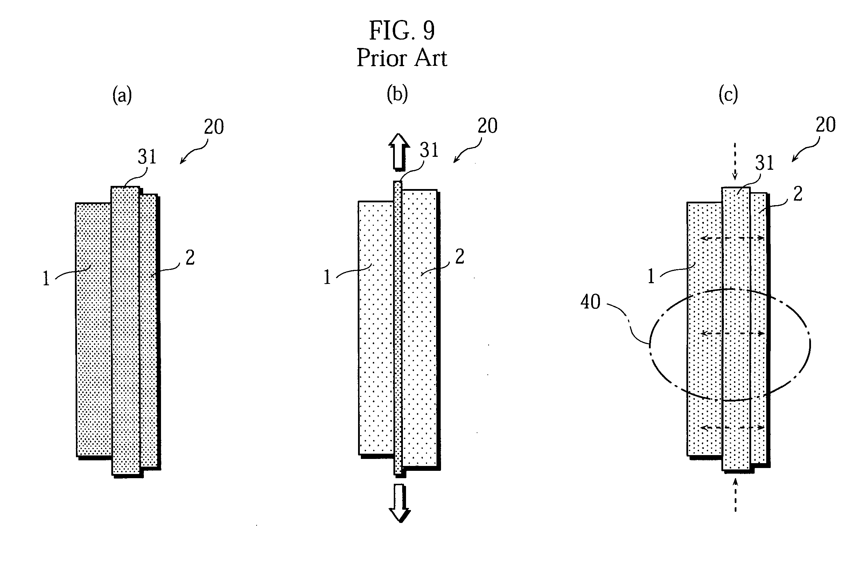

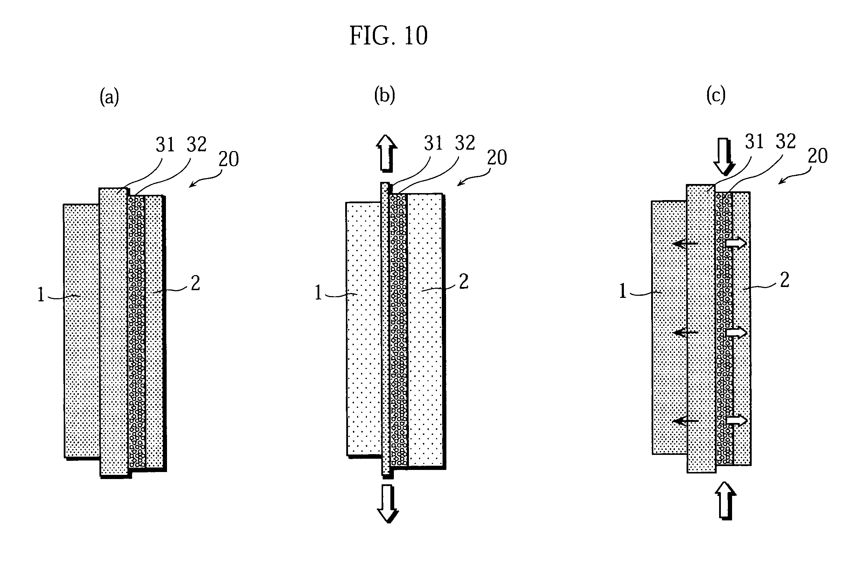

Normally, the electrolyte required for the electrode reactions is filled in the interior of the electrodes and the separator at the initial stage of assembling the battery. When the battery is exposed to the condition in which the electrolyte is consumed considerably, such as a 60°C cycle test and a storage test, the battery capacity tends to deteriorate because of shortage of the amount of the electrolyte, deposition of reaction products, and the like. The shortage of the amount of electrolyte has a great adverse effect especially on the battery capacity deterioration.
Here, as shown in the foregoing preliminary experiment 2, there exist MD (machine direction) and TD (transverse direction: cross direction) in the separator because of the manufacturing process, and usually, when winding a sheet-shaped electrode assembly, a longitudinal direction of the separator corresponds to MD, while the width direction corresponds to TD. Meanwhile, in a battery employing a wound electrode assembly, the electrolyte permeates primarily from the top and bottom portions of the wound electrode assembly because of the battery structure, so it is necessary that the separator have a high electrolyte absorbency along TD.
However, in Comparative Batteries Z1 and Z2, which do not have the porous layer, PE fibers are in a structure such that they tend to expand easily along MD because of the drawing process, and as a result, the polymer fibers tend to align along MD. Therefore, the fibrous polyolefin serves like a wall along TD, preventing permeation and diffusion of the electrolyte. As a consequence, although Comparative Batteries Z1 and Z2 contain almost the same amount of electrolyte filled in the batteries as Batteries A1 and A2 of the invention, the amount of electrolyte contained in the separator decreases during discharge in Comparative Batteries Z1 and Z2. Consequently, the electrolyte cannot be supplemented to the positive and negative electrodes smoothly, and the electrolyte dries out in both the positive and negative electrodes. Thus, what is called a dry-out phenomenon occurs, and the cycle performance deteriorates.
Specifically, the details are explained with reference to Fig. 9. It should be noted that in Fig. 9, the density is varied according to the amount of electrolyte in the separator 31 and the positive and negative electrodes 1 and 2 (i.e., the electrolyte is depicted darker when the amount of electrolyte in the separator 31 and the positive and negative electrodes 1 and 2 is large, while it is depicted lighter when the amount of electrolyte in the separator 31 and the positive and negative electrodes 1 and 2 is small). In addition, the normal arrows indicate that the release and permeation of electrolyte is carried out smoothly, whereas the dashed line arrows indicate that they are not performed smoothly. These are likewise applicable to Fig. 10, which will be discussed later.
First, at the initial stage of electrolyte impregnation, the electrolyte has been permeated and diffused relatively entirely in the positive and negative electrodes 1 and 2 because of a forcible operation such as decompression or compression, as shown in the figure (a). Next, as shown in the figure (b), when charging the battery, the positive and negative electrodes 1 and 2 expand (for example, the positive electrode expands by about 1 volume % when using LCO and the negative electrode expands about 10 volume % when using graphite), releasing the electrolyte from the inside (the electrolyte is released particularly in a large amount from the interior of the negative electrode). In this case, while the separator 31 absorbs the volume of the expansion (in other words, while the separator 31 reduces its thickness), the electrolyte that cannot be retained in the separator 31 is released outside the wound electrode assembly 20. Thereafter, when both the positive and negative electrodes 1 and 2 shrink in discharge, the electrolyte that has been retained in the separator 31 is supplied to both the positive and negative electrodes 1 and 2. At the same time, the electrolyte that has been released outside the wound electrode assembly 20 permeates and diffuses in the separator 31 through the gaps between the separator 31 and the positive and negative electrodes 1 and 2 and by the permeation and diffusion along TD, and is thereafter supplied to from the separator 31 to both the positive and negative electrodes 1 and 2.

Nevertheless, as shown in the figure (c), the speed of permeation and diffusion of the electrolyte that has been released outside the wound electrode assembly 20 into the separator is very slow, so the permeation and diffusion of the electrolyte may not catch up the pace in the tests in which the consumption of the electrolyte is great, such as in a 60°C cycle test and a storage test. As a consequence, the amount of the electrolyte becomes insufficient in both the positive and negative electrodes 1 and 2. In particular, the amount of the electrolyte tends to be insufficient in the vicinity of the central portion 40. As a consequence, the electrolyte dries out in both the positive and negative electrodes 1 and 2, and thus, what is called a dry-out phenomenon occurs. It should be noted that the speed of the electrolyte that has been released outside the wound electrode assembly 20 permeates and diffuses from the end portions of both the positive and negative electrodes 1 and 2 into the interiors thereof is very slow, as demonstrated in the preliminary experiment 3, and cannot meet expectations.

- The reason why Batteries A1 and A2 of the invention are superior in cycle performance

In Batteries A1 and A2 of the invention, which use the separator on which the porous layer is stacked, the porous layer acts as the electrolyte absorption path for the electrolyte. Therefore, a sufficient amount of electrolyte permeates and diffuses into the separator even during discharge, so that the electrolyte can be supplemented to the positive and negative electrodes smoothly. As a result, it is believed possible to prevent the electrolyte from drying out in both the positive and negative electrodes and thereby hinder the deterioration of the cycle performance due to the dry-out phenomenon.

Specifically, the details are explained with reference to Fig. 10. First, at the initial stage of electrolyte impregnation, the electrolyte has been permeated and diffused relatively entirely in the positive and negative electrodes 1 and 2 because of a forcible operation such as decompression or compression, as shown in the figure (a). Also, as shown in the figure (b), when charging the battery, both the positive and negative electrodes 1 and 2 expand, releasing the electrolyte from the inside. While the separator 31 absorbs the volume of the expansion, the electrolyte that cannot be retained in the separator 31 is released outside the wound electrode assembly 20. These processes are the same as in the case of Comparative Batteries Z1 and Z2. That the electrolyte that has been retained in the separator 31 is supplied to both the positive and negative electrodes 1 and 2 when both the positive and negative electrodes 1 and 2 shrink during discharge is also the same as in the case of Comparative Batteries Z1 and Z2.

Then, as shown in the figure (c), the electrolyte that has been released outside the wound electrode assembly 20 permeates and diffuses into the porous layer 32. Thereafter, the electrolyte is supplied from the porous layer 32 and the separator 31 to both the positive and negative electrodes 1 and 2. Since the speed of permeation and diffusion of the electrolyte that has been released outside the wound electrode assembly 20 (including the excess electrolyte) into the porous layer is vary fast, the electrolyte permeates and diffuses into both the positive and negative electrodes 1 and 2 even in the tests in which the consumption of the electrolyte is great, such as in a 60°C cycle test and a storage test. Thus, the amount of the electrolyte does not become insufficient in both the positive and negative electrodes 1 and 2, and even in the vicinity of the central portion, shortage of the electrolyte can be prevented. As a result, what is called a dry-out phenomenon, which is due to the drying out of the electrolyte in both the positive and negative electrodes 1 and 2, can be prevented. It should be noted that the speed of the electrolyte that has been released outside the wound electrode assembly 20 permeates and diffuses from the end portions of both the positive and negative electrodes 1 and 2 into the interiors thereof is very slow, as demonstrated in the preliminary experiment 3, and cannot meet expectations. This is also the same as described for Comparative Batteries Z1 and Z2.

(2) The reason why Comparative Battery Z2 is inferior in cycle performance to Comparative Battery Z1

The amount of the electrolyte contained in a separator is approximately proportional to the pore volume calculated by thickness x porosity. Here, if the separator thickness decreases, not only does the amount of the electrolyte contained in the separator decrease but also it becomes necessary to reduce the porosity in order to ensure sufficient strength, so the amount of the electrolyte contained in the separator further decreases. Consequently, Comparative Battery Z2, which has a small separator thickness and which inevitably has a small porosity in order to ensure sufficient strength, shows poorer cycle performance than Comparative Battery Z1, which has a large separator thickness and which can have a relatively large porosity.

It should be noted that since the manufacturing of prismatic batteries and laminate batteries involves a pressing process of the wound electrode assembly, the pores in the prismatic batteries and the laminate batteries are probably even smaller than the separator at the initial stage.

(3) The reason why Battery A1 of the invention is superior in cycle performance to Battery A2 of the invention

The reason is believed due to the fact that the porous layer is disposed on the positive electrode side in Battery A2 of the invention while the porous layer is disposed on the negative electrode side in Battery A1 of the invention. Specifically, the details are as follows.

When the battery is charged at a high temperature as in the cycle performance test at 60°C, the electrolyte is decomposed very frequently particularly by the oxidation of the positive electrode active material. Just from the results seen in the high-temperature storage tests that have been performed conventionally, the electrolyte has a strong tendency to decompose and form a gas due to the cause originating from the positive electrode. This causes the electrolyte to be consumed in the interior of the positive electrode. However, in this case, since the excess electrolyte contained in the separator is supplemented to the positive electrode smoothly, a sufficient amount of the electrolyte in the positive electrode is ensured. The reason is that, because the positive electrode can absorb the electrolyte at a faster speed than the negative electrode as demonstrated in the preliminary experiment 3, the excess electrolyte contained in the separator is supplied smoothly to the positive electrode when the electrolyte has been consumed in the positive electrode, even if no porous layer exists on the positive electrode side. This is, however, the behavior of the battery with an end-of-charge voltage of about 4.2 V, and if the battery has an end-of-charge voltage higher than that, the behavior as will be described later will result. Note that it is believed that similar reactions also take place in the negative electrode.

On the other hand, it is known that in the battery with an end-of-charge voltage of about 4.2 V, the thickness change ratio of an electrode plate before and after a charge and discharge process is less than 2% for the positive electrode and about 10% for the negative electrode, from the results of an actual electrode measurement. Thus, the thickness of the positive electrode shows almost no change by a charge and discharge process, so it is considered that there is almost no change in the amount of the electrolyte impregnated in the electrode plate at the initial stage unless the electrolyte is consumed by storage and charge-discharge cycles at high temperatures. In contrast, the negative electrode shows about 10% change. Thus, it is believed that the electrolyte is squeezed out from the interior of the electrode plate due to the expansion by charge while the amount of the electrolyte in the electrode plate is supplemented during discharge by absorbing the electrolyte from the separator. The separator serves to provide this buffer action, and the electrolyte in the separator exists while it is primarily interacting with the negative electrode.

Accordingly, when the porous layer is disposed on the negative electrode side as in Battery A1 of the invention, the electrolyte can be supplied smoothly also to the negative electrode, so good cycle performance is obtained. On the other hand, when the porous layer is disposed on the positive electrode side as in Battery A2 of the invention, the negative electrode gradually suffers from shortage of the electrolyte, and as a consequence, the cycle performance is inferior because of the resulting non-uniform charge-discharge reactions and the like.

It may seem possible that in the case of Battery A2 of the invention as well, the electrolyte permeated in the porous layer may be supplied to the negative electrode through the separator. However, this allows not a little resistance (barrier) to the electrolyte permeation to exist in the pore contact surface at the interface between the PA resin, which constitutes the porous layer, and the PE resin, which constitutes the separator. Therefore, it is believed that the electrolyte that has permeated in the porous layer is not necessarily supplied to the separator. Accordingly, in Battery A2 of the invention, the negative electrode gradually suffers from shortage of the electrolyte, and the cycle performance deteriorates.

Thus, it is believed possible to improve the cycle life by providing the porous layer preferentially for the electrode surface that tends to cause the shortage of electrolyte.

This is due to the fact that, in a combination electrode of lithium cobalt oxide/graphite, graphite shows a greater volumetric change associated with charge and discharge. Therefore, it is desirable that the porous layer be provided for the electrode in which the expansion and shrinkage is greater and the entry and exit of the electrolyte into and from the interior is more significant. In the case where silicon, tin, or the like is used as the negative electrode active material as well, it is believed preferable to provide the porous layer on the negative electrode side, in which the volumetric change during charge and discharge is greater, as in the case of graphite (although it may depend on the mode of deterioration, it is believed desirable to form and dispose the porous layer on the negative electrode side in the case of combination of lithium cobalt oxide and graphite from this result).

[SECOND EMBODIMENT]

(Example)

A battery was fabricated in the same manner as described in Example 1 of the first embodiment above, except that, as described in the following manufacturing method, the porous layer was made from inorganic microparticles and a slurry, not from a resin, and that the porous layer was disposed on both the positive electrode side and the negative electrode side of the separator (the total thickness of the two porous layers was 4 $\mu$m, 2 $\mu$m per one side).

First, an acetone solvent was mixed with 10 mass %, based on the mass of acetone, of $TiO_2$ inorganic particles (rutile-type, particle size 0.38 $\mu$m, KR380 manufactured by Titan Kogyo Kabushiki Kaisha) and 5 mass %, based on the mass of $TiO_2$, of copolymer (elastic polymer serving as a binder) containing acrylonitrile structures (units), and a mixing and dispersing process was carried out using a Filmics mixer, made by Tokushu Kika. Thereby a slurry in which $TiO_2$ was dispersed was prepared. Next, the resultant slurry was coated onto both surfaces of a separator (thickness 12 $\mu$m, porosity 41%) by dip coating, and thereafter the solvent was removed by drying. Thus, porous layers each comprising $TiO_2$ (inorganic microparticles) as the main component were formed on both surfaces of the separator (total thickness: 4 $\mu$m [2 $\mu$m per one side]).

The battery fabricated in this manner is hereinafter referred to as Battery B of the invention.

Table 7 below shows the summary of the configurations of Battery B of the invention, as well as Comparative Batteries Z1 and Z2, which are the subjects to be compared with this Battery B of the invention.

TABLE 7

| Battery | Battery shape | Separator | | | Porous layer | | | | End-of-charge voltage (Positive electrode potential vs. lithium reference electrode potential) (V) |
| | | Material | Thickness ($\mu$m) | Porosity (%) | Provision of porous layer | Type | Thickness ($\mu$m) | Location | |
| B | Laminate | PE | 12 | 41 | Yes | Inorganic microparticles ($TiO_2$) | 4 (2 $\mu$m per one side) | Surfaces of positive electrode side and negative electrode side of separator | 4.20 (4.30) |
| Z2 | | | | | No | - | - | - | |
| Z1 | | | 16 | 50 | No | - | - | - | |

(Experiment)

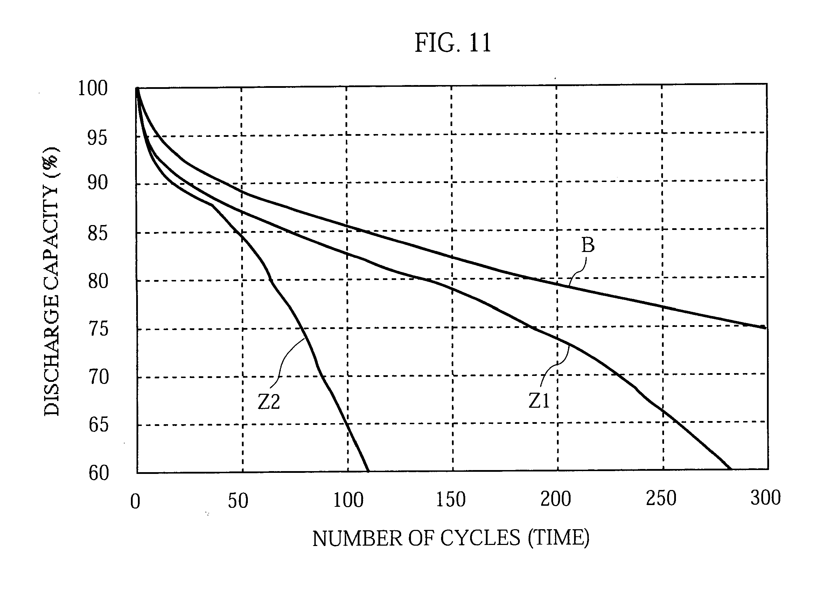

The cycle performance of Battery B of the invention was determined. The results are shown in Fig. 11. Fig. 11 also depicts the cycle performance of Comparative Batteries Z1 and Z2. The charge-discharge conditions were the same as those in the experiment described in the first embodiment above.

As clearly seen from Fig. 11, it is observed that Battery B of the invention, in which the porous layer comprising inorganic microparticles as the main component is disposed between the separator and the positive and negative electrodes, is superior in cycle performance to Comparative Battery Z2 (in which the separator thickness is the same as that in Battery B of the invention) and Comparative Battery Z1 (in which the separator thickness is the same as the total thickness of the separator and the porous layer in Battery B of the invention separator), in which no porous layer is provided. The reason is believed to be that, in Battery B of the invention, the electrolyte can permeate and diffuse into both the positive and negative electrodes even in the tests in which the consumption of the electrolyte is great, such as in a 60°C cycle test and a storage test, because the speed of permeation and diffusion of the electrolyte (including the excess electrolyte) that is outside the wound electrode assembly into the porous layer is very vast, as in Batteries A1 and A2 of the invention, in which the porous layer is made of a resin.

From the foregoing results, it will be appreciated that the porous layer comprising inorganic microparticles as the main component also exhibits the same level of advantageous effects as the porous layer made of a resin.

[THIRD EMBODIMENT]

(Example)

A battery was fabricated in the same manner as described in Example of the second embodiment above, except that the porous layer was formed on the positive electrode surface (the surface of the positive electrode active material layer), that a separator having a thickness of 23 $\mu$m and a porosity of 52% was used as the separator, and that the battery shape was cylindrical (cylindrical battery having a design capacity of 2100 mAh).

The porous layer on the positive electrode surface was prepared in the following manner. First, an NMP (N-methyl-2-pyrrolidone) solvent was mixed with 20 mass %, based on the mass of NMP, of $TiO_2$ inorganic particles [particle size 0.38 $\mu$m, KR380 (rutile-type) manufactured by Titan Kogyo Kabushiki Kaisha] and 5 mass %, based on the mass of $TiO_2$, of copolymer (elastic polymer) containing acrylonitrile structures (units), and a mixing and dispersing process was carried out using a Filmics mixer, made by Tokushu Kika. Thereby a slurry in which $TiO_2$ was dispersed was prepared. Next, the resultant slurry was coated onto the surface of the positive electrode active material layer using a reverse method, and thereafter the solvent was removed by drying. Thus, a porous layer (inorganic microparticle layer, thickness: 4 $\mu$m) comprising $TiO_2$ (inorganic microparticles) as the main component was formed on the surface of the positive electrode active material layer.

The manufacturing method of the cylindrical type battery was as follows. First, the positive and negative electrodes and the separator were prepared as in the case of the laminate type battery, and thereafter, respective lead terminals were attached to both sides of the positive and negative electrodes. Next, the positive and negative electrodes were spirally wound with the separator interposed therebetween, to thus prepare a spirally wound electrode assembly. Subsequently, the electrode assembly was placed into a closed-end cylindrical battery can, and the electrolyte was filled in the battery can. Lastly, the opening of the battery can was sealed with a sealing lid, to thereby complete the battery. The battery fabricated in this manner is hereinafter referred to as Battery C of the invention.

(Comparative Example)

A battery was fabricated in the same manner as described in Example above, except that no porous layer was provided on the surface of the positive electrode active material layer.

The battery fabricated in this manner is hereinafter referred to as Comparative Battery Y.

Table 8 below shows the summary of the configurations of Battery C of the invention and Comparative Battery Y.

TABLE 8

| Battery | Battery shape | Separator | | | Porous layer | | | | End-of-charge voltage(Positive electrode potential vs. lithium reference electrode potential) (V) |
| | | Material | Thickness (μm) | Porosity (%) | Provision of porous layer | Type | Thickness (μm) | Location | |
|---|---|---|---|---|---|---|---|---|---|
| C | Cylindrical | PE | 23 | 52 | Yes | Inorganic microparticles (TiO$_2$) | 4 | Positive electrode surface | 4.20 (4.30) |
| Y | | | | | No | - | - | - | |

(Experiment)

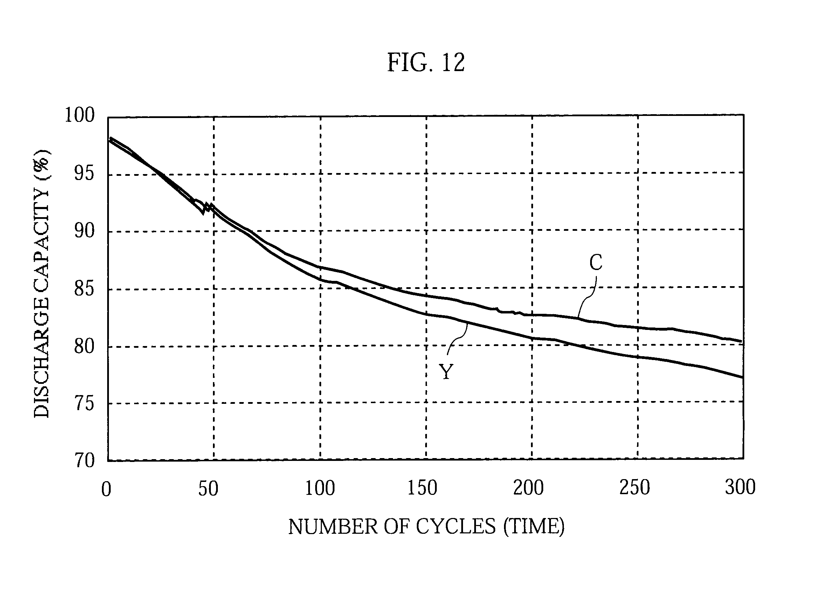

The cycle performance of Battery C of the invention and Comparative Battery Y was determined. The results are shown in Fig. 12. The charge-discharge conditions were as follows.

[Charge-discharge Conditions]

- Charge conditions

Each of the batteries was charged at a constant current of 1.0 It (2,100 mA) until the battery voltage reached 4.20 V, and thereafter charged at a voltage of 4.20 V until the current value reached 1/50 It (42.0 mA).

- Discharge conditions

Each of the batteries was discharged at a constant current of 1.0 It (2,100 mA) until the battery voltage reached 2.75 V.
The interval between the charge and the discharge was 10 minutes, and the charge-discharge temperature was 60°C.
As clearly seen from Fig. 12, it is observed that Battery C of the invention, in which the porous layer comprising inorganic microparticles as the main component is disposed on the positive electrode surface (between the separator and the positive electrode active material layer), is superior in cycle performance to Comparative Battery Y, in which no porous layer is provided on the positive electrode surface.
The reason is believed to be the same as described in the experiment of the second embodiment above.
From the present experiment, it will be appreciated that the porous layer is not limited to such a structure that it is disposed on the surface of the separator, but it may be disposed on the surface of the positive electrode (the positive electrode active material layer).

[Assumptions for Conducting the Experiments in the Following Fourth Through Seventh Embodiments]

Commonly, the end-of-charge voltage of a battery is 4.20 V. For this reason, the first embodiment to the third embodiment employed a battery with an end-of-charge voltage of 4.20 V. However, a lithium cobalt oxide/graphite system lithium-ion battery with an end-of-charge voltage of 4.40 V is also available in the market. In this system, not only does the amount of the non-aqueous electrolyte in the negative electrode become insufficient, but also the expansion-shrinkage ratio in the positive electrode increases due to the higher charge potential of the positive electrode. At the same time, the non-aqueous electrolyte is consumed at a very rapid pace due to oxidative decomposition of the non-aqueous electrolyte because the charged state of the positive electrode is in a further higher region. As a consequence, the shortage of the non-aqueous electrolyte in the positive electrode is more serious. In view of this, the present inventors conducted the same experiment as was conducted in the first to the third embodiments for the batteries with an end-of-charge voltage of 4.30 V or higher.

[FOURTH EMBODIMENT]

(Example 1)

A battery was fabricated in the same manner as described in Example of the second embodiment above, except that a separator having a thickness of 16 $\mu$m and a porosity of 50% was used as the separator, that the porous layers were disposed on the surfaces of the positive electrode side and the negative electrode side of the separator (the total thickness of the two porous layers was 4 $\mu$m, 2 $\mu$m per one side), and that the battery design was such that the end-of-charge voltage was 4.40 V (the positive electrode potential versus the lithium reference electrode potential was 4.50 V). It should be noted that dip coating was used to provide the porous layers on the surfaces of the positive electrode side and the negative electrode side of the separator.
The battery fabricated in this manner is hereinafter referred to as Battery D1 of the invention.

(Example 2)

A battery was fabricated in the same manner as described in Example 1 above, except that the porous layer (thickness: 4 $\mu$m) was provided only on the surface of the negative electrode side of the separator using die coating.
The battery fabricated in this manner is hereinafter referred to as Battery D2 of the invention.

(Comparative Example)

A battery was fabricated in the same manner as described in Example 1 above, except that no porous layer was formed on the surface of the separator.

The battery fabricated in this manner is hereinafter referred to as Comparative Battery X.

Table 9 below shows the summary of the configurations of Batteries D1 and D2 of the invention as well as Comparative Battery X.

TABLE 9

| Battery | Battery shape | Separator | | | Porous layer | | | | End-of-charge voltage (Positive electrode potential vs. lithium reference electrode potential) (V) |
|---|---|---|---|---|---|---|---|---|---|
| | | Material | Thickness ($\mu$m) | Porosity (%) | Provision of porous layer | Type | Thickness ($\mu$m) | Location | |
| D1 | Laminate type | PE | 16 | 50 | Yes | Inorganic microparticles ($TiO_2$) | 4 (2 $\mu$m per one side) | Surfaces of positive electrode side and negative electrode side of separator | 4.40 (4.50) |
| D2 | | | | | | | 4 | Surface of negative electrode side of separator | |
| X | | | | | No | - | - | - | |

EP 1 947 710 A1

(Experiment)

The cycle performance of Batteries D1 and D2 of the invention and Comparative Battery X was determined. The results are shown in Fig. 13. The charge-discharge conditions were as follows.

[Charge-discharge Conditions]

- Charge conditions

Each of the batteries was charged at a constant current of 1.0 It (750 mA) until the battery voltage reached 4.40 V, and thereafter charged at a voltage of 4.40 V until the current value reached 1/20 It (37.5 mA).

- Discharge conditions

Each of the batteries was discharged at a constant current of 1.0 It (750 mA) until the battery voltage reached 2.75 V.
The interval between the charge and the discharge was 10 minutes, and the charge-discharge temperature was 45°C.
As clearly seen from Fig. 13, it is observed that Battery D1 of the invention, in which the porous layers each comprising inorganic microparticles as the main component are disposed on the surfaces of the positive electrode side and the negative electrode side of the separator (between the separator and the positive and negative electrodes), and Battery D2 of the invention, in which the same porous layer is disposed on the surface of the negative electrode side of the separator (between the separator and the negative electrode), are superior in cycle performance to Comparative Battery X, in which no porous layer is provided. In particular, it is observed that the difference in cycle performance between Batteries D1 and D2 of the invention and Comparative Battery X, both of which have an end-of-charge voltage of 4.40 V, is greater than the difference between Battery B of the invention and Comparative Batteries Z1 and Z2, both of which have an end-of-charge voltage of 4.20 V.
The reason is believed to be as follows. When the end-of-charge voltage is 4.40 V, the expansion and shrinkage of the electrodes are greater than when the end-of-charge voltage is 4.20 V. As a consequence, the shortage of the electrolyte in the separator is exacerbated. In addition, since the positive electrode potential becomes higher, the electrolyte tends to undergo oxidative decomposition more easily. As a result, the shortage of the electrolyte in the electrodes also is exacerbated. Consequently, in Comparative Battery X, in which the porous layer is not provided, the shortage of the electrolyte is exacerbated significantly in both the positive and negative electrodes. In contrast, in Battery D1 of the invention, in which the porous layer is provided between the separator and the positive and negative electrodes, and in Battery D2 of the invention, in which the porous layer is provided between the negative electrode and the separator, the electrolyte permeates and diffuses sufficiently into both the positive and negative electrodes even in a test in which the end-of-charge voltage is 4.40 V and the consumption of the electrolyte is great because the speed of permeation and diffusion of the electrolyte (including the excess electrolyte) outside the wound electrode assembly into the porous layer is very fast.
In addition, as has been described above, when the end-of-charge voltage is 4.40 V, not only does the amount of the non-aqueous electrolyte in the negative electrode become insufficient, but also the expansion-shrinkage ratio in the positive electrode increases due to the higher charge potential of the positive electrode. At the same time, the non-aqueous electrolyte is consumed at a very rapid pace due to oxidative decomposition of the non-aqueous electrolyte since the charged state of the positive electrode is in a further higher region, so the shortage of the non-aqueous electrolyte in the positive electrode is further exacerbated. In view of this, when the porous layer is provided not only between the negative electrode and the separator but also between the positive electrode and the separator as in Battery D1 of the invention, the electrolyte shortage in the positive and negative electrodes is resolved. For this reason, it will be understood that the cycle performance in Battery D1 of the invention is improved over Battery D2 of the invention, in which the porous layer is provided only between the negative electrode and the separator.
In order to confirm that the expansion-shrinkage ratio in the positive electrode increases due to a higher charge potential of the positive electrode, the amount of expansion and shrinkage in positive electrodes and that in negative electrodes were studied at end-of-charge voltages of 4.20 V (positive electrode potential being 4.30 V versus the potential of lithium reference electrode), 4.30 V (positive electrode potential being 4.40 V versus the potential of lithium reference electrode), 4.35V (positive electrode potential being 4.45 V versus the potential of lithium reference electrode), and 4.40 V (positive electrode potential being 4.50 V versus the potential of lithium reference electrode). The results are shown in Table 10.
TABLE 10

| End-of-charge voltage (Positive electrode potential versus lithium reference electrode potential) | Positive electrode expansion and shrinkage ratio | Negative electrode expansion and shrinkage ratio |
|---|---|---|
| 4.20V (4.30V) | Approx. 2% | Approx. 10% |
| 4.30V (4.40V) | Approx. 2% | Approx. 10% |
| 4.35V (4.45V) | Approx. 3% | Approx. 10% |
| 4.40V (4.50V) | Approx. 3% | Approx. 10% |
| *The expansion and shrinkage ratio of the negative electrodes does not change because the batteries are designed such that the charge depth of negative electrode is invariable irrespective of the end-of-charge voltage. | | |

As clearly seen from Table 10, it is observed that in the negative electrodes, the amount of expansion and shrinkage is constant irrespective of the end-of-charge voltage, while in the positive electrodes, the higher the end-of-charge voltage is, the greater the amount of expansion and shrinkage becomes. This supports the foregoing discussion.

In addition, when the end-of-charge voltage is 4.2 V, the battery temperature hardly rises to 60°C in normal use conditions, so the experiments in the first to third embodiments have the significance of acceleration test under very severe conditions (the cycle performance test under an end-of-charge voltage of 4.2 V and the temperature 60°C). On the other hand, when the end-of-charge voltage is 4.38 V or 4.40 V, the battery temperature sometimes rises to about 45°C in normal use conditions. Therefore, the experiments in the present embodiment and the fifth to seventh embodiments, which will be described later, have rather weak significance of acceleration test under very severe conditions (the cycle performance test under an end-of-charge voltage of 4.38 V or 4.40 V, and the temperature 60°C). Thus, it can be said that the experiments in the first to third embodiments are the battery performance test when the battery is used under special environments, whereas the experiments in the present embodiment and the fifth to seventh embodiments are the battery performance test when the battery is used under normal environments.

[FIFTH EMBODIMENT]

(Example 1)

A battery was fabricated in the same manner as described in Example 1 of the fourth embodiment above, except that a separator having a thickness of 18 μm and a porosity of 50% was used as the separator, that the battery shape was prismatic (prismatic battery having a design capacity of 820 mAh), and that the battery design was such that the end-of-charge voltage was 4.38 V (the positive electrode potential versus the lithium reference electrode potential was 4.48 V). The manufacturing method of the prismatic battery was as follows.

First, the positive and negative electrodes and the separator were prepared as in the case of the laminate type battery, and respective lead terminals were attached to both of the positive and negative electrodes. Next, the positive and negative electrodes were spirally wound with the separator interposed therebetween and thereafter pressed, to thus prepare a flat-shaped electrode assembly. Subsequently, the electrode assembly was placed into a closed-end cylindrical battery can, and the electrolyte was filled in the battery can. Lastly, the opening of the battery can was sealed with a sealing lid, to thereby complete the battery.

The battery fabricated in this manner is hereinafter referred to as Battery E1 of the invention.

(Example 2)

A battery was fabricated in the same manner as described in Example 1 above, except that a separator having a thickness of 16 μm and a porosity of 46% was used as the separator.

The battery fabricated in this manner is hereinafter referred to as Battery E2 of the invention.

(Comparative Examples 1 and 2)

Batteries were fabricated in the same manner as described in Examples 1 and 2 above, except that no porous layer was provided.
The batteries fabricated in this manner are hereinafter referred to as Comparative Batteries W1 and W2, respectively.

(Experiment)

The cycle performance of Batteries E1 and E2 of the invention and Comparative Batteries W1 and W2 was determined. The results are shown in Table 11. The charge-discharge conditions were as follows.

[Charge-discharge Conditions]

- Charge conditions

Each of the batteries was charged at a constant current of 1.0 It (800 mA) until the battery voltage reached 4.38 V, and thereafter charged at a voltage of 4.38 V until the current value reached 1/20 It (40.0 mA).

- Discharge conditions

Each of the batteries was discharged at a constant current of 1.0 It (800 mA) until the battery voltage reached 2.75 V.
The interval between the charge and the discharge was 10 minutes, and the charge-discharge temperature was 45°C.
TABLE 11

| Battery | Battery shape | Separator | | | Porous layer | | | | End-of-charge voltage (Positive electrode potential vs. lithium reference electrode potential) (V) | Remaining capacity (%) |
| | | Material | Thickness ($\mu$m) | Porosity (%) | Provision of porous layer | Type | Thickness ($\mu$m) | Location | | |
|---|---|---|---|---|---|---|---|---|---|---|
| E1 | Prismatic | PE | 18 | 50 | Yes | Inorganic microparticles ($TiO_2$) | 4 | Surfaces of positive electrode side and negative electrode side of separator | 4.38 (4.48) | 65.8 (300 cycles) |
| W1 | | | | | No | - | - | - | | 0 (240 cycles) |
| E2 | | | 16 | 46 | Yes | Inorganic microparticles ($TiO_2$) | 4 | Surfaces of positive electrode side and negative electrode side of separator | | 69.0 (300 cycles) |
| W2 | | | | | No | - | - | - | | 0 (260 cycles) |

As clearly seen from Table 11, it is observed that Batteries E1 and E2 of the invention, in which the porous layers comprising inorganic microparticles as the main component are disposed on the surfaces of the positive electrode side and the negative electrode side of the separator, are superior in cycle performance to Comparative Batteries W1 and W2 (in which the separator thickness is the same as the separator thickness in Batteries E1 and E2 of the invention). The reason is believed to be the same as described in the experiment of the fourth embodiment above.

In addition, from the present experiment, the present invention is also applicable to prismatic batteries as well as laminate type batteries.

[SIXTH EMBODIMENT]

(Example)

A battery was fabricated in the same manner as described in Example 1 of the fifth embodiment above, except that the porous layer was disposed on the positive electrode surface (the surface of the positive electrode active material layer), that a separator having a thickness of 23 $\mu$m and a porosity of 52% was used as the separator, and that the battery shape was laminate type (laminate type battery having a design capacity of 780 mAh). Note that the method of forming the porous layer on the positive electrode surface is the same as described in Example of the third embodiment above.

The battery fabricated in this manner is hereinafter referred to as Battery F of the invention.

(Comparative Example)

A battery was fabricated in the same manner as described in Example above, except that no porous layer was provided on the positive electrode surface.

The battery fabricated in this manner is hereinafter referred to as Comparative Battery V.

Table 12 below shows the summary of the configurations of Battery F of the invention and Comparative Battery V.

TABLE 12

| Battery | Battery shape | Separator | | | Porous layer | | | | End-of-charge voltage(Positive electrode potential vs. lithium reference electrode potential) (V) |
|---|---|---|---|---|---|---|---|---|---|
| | | Material | Thickness ($\mu$m) | Porosity (%) | Provision of porous layer | Type | Thickness ($\mu$m) | Location | |
| F | Laminate type | PE | 23 | 52 | Yes | Inorganic microparticles ($TiO_2$) | 4 | Positive electrode surface | 4.40 (4.50) |
| V | | | | | No | - | - | - | |

(Experiment)

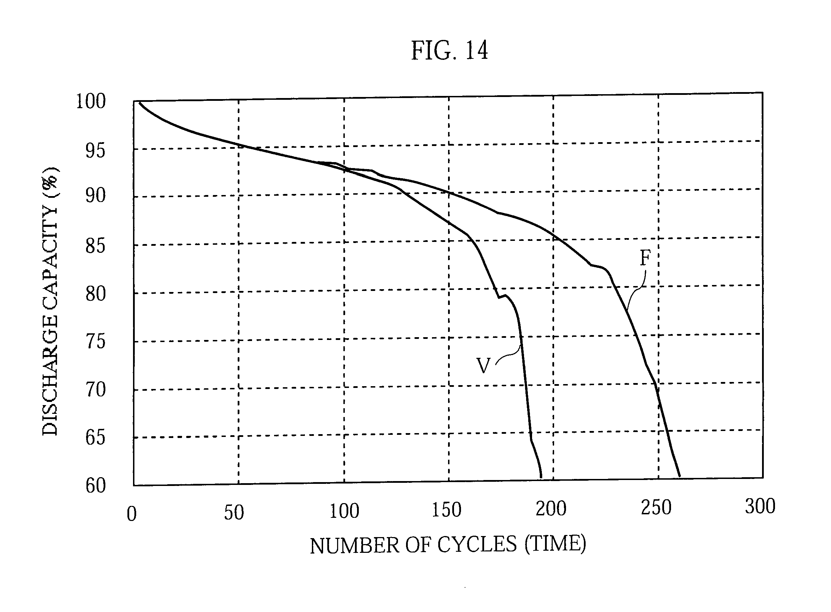

The cycle performance of Battery F of the invention and Comparative Battery V was determined. The results are shown in Fig. 14. The charge-discharge conditions were the same as those in the experiment described in the fourth embodiment above.

As clearly seen from Fig. 14, it is observed that Battery F of the invention, in which the porous layer comprising inorganic microparticles as the main component is disposed on the positive electrode surface, is superior in cycle performance to Comparative Battery V, in which no porous layer is provided on the positive electrode surface.

The reason is believed to be the same as described in the experiment of the fourth embodiment above.

From the present experiment, it will be appreciated that the porous layer is not limited to such a structure that it is disposed on the surface of the separator (separator), but it may be disposed on the surface of the positive electrode (the positive electrode active material layer).

[SEVENTH EMBODIMENT]

(Example)

A battery was fabricated in the same manner as described in Example 1 of the fifth embodiment above, except that the porous layer was formed on the positive electrode surface (the surface of the positive electrode active material layer). Note that the method of forming the porous layer on the positive electrode surface is the same as described in Example of the third embodiment above.

The battery fabricated in this manner is hereinafter referred to as Battery G of the invention.

(Comparative Example)

A battery was fabricated in the same manner as described in Example above, except that no porous layer was provided on the surface of the positive electrode.

The battery fabricated in this manner is hereinafter referred to as Comparative Battery U.

(Experiment)

The cycle performance of Battery G of the invention and Comparative Battery U was determined. The results are shown in Table 13. The charge-discharge conditions were the same as those in the experiment described in the fifth embodiment above.

TABLE 13

| Battery | Battery shape | Separator | | | Porous layer | | | | End-of-charge voltage (Positive electrode potential vs. lithium reference electrode potential) (V) | Remaining capacity (%) |
| | | Material | Thickness ($\mu$m) | Porosity (%) | Provision of porous layer | Type | Thickness ($\mu$m) | Location | | |
|---|---|---|---|---|---|---|---|---|---|---|
| G | Prismatic | PE | 18 | 50 | Yes | Inorganic microparticles ($TiO_2$) | 4 | Positive electrode surface | 4.38 (4.48) | 71.3 (300 cycles) |
| U | | | | | No | - | - | - | | 26.7 (300 cycles) |

EP 1 947 710 A1

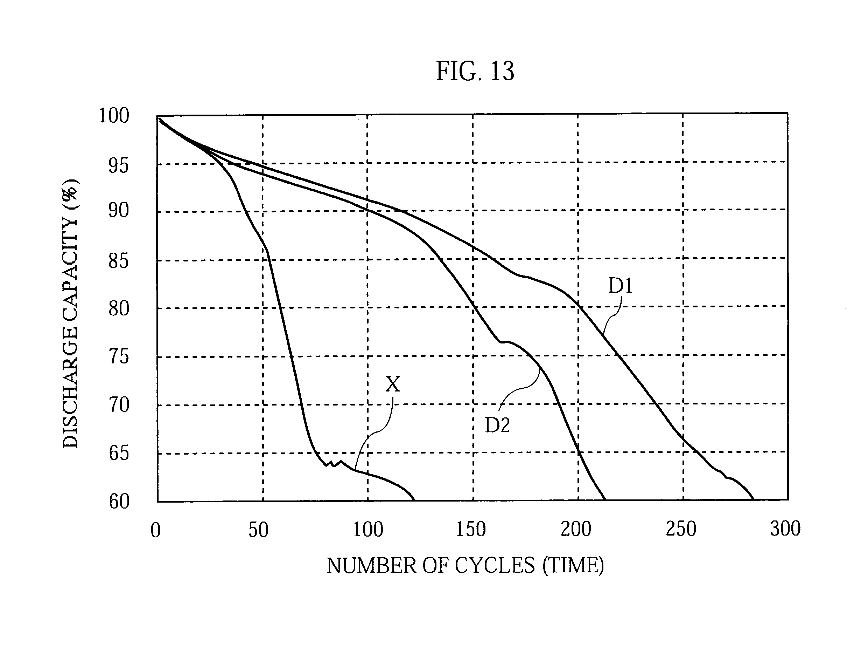

As clearly seen from Fig. 13, it is observed that Battery G of the invention, in which the porous layer comprising inorganic microparticles as the main component is disposed between the separator and the positive electrode active material layer, is superior in cycle performance to Comparative Battery U, in which no porous layer is provided. The reason is believed to be the same as described in the experiment of the fourth embodiment above.

From the present experiment, it will be appreciated that the porous layer is not limited to such a structure that it is disposed on the surface of the separator (separator), but it may be disposed on the surface of the positive electrode (the positive electrode active material layer).

[ADDITIONAL EXPERIMENT]

The excess battery spaces in a cylindrical battery, a prismatic battery, and a laminate battery were calculated. The results are shown in Table 14. A 18650 cylindrical battery was used as the cylindrical battery, a 553450 prismatic battery and a 553436 prismatic battery were used as the prismatic batteries, and a 383562 laminate battery was used as the laminate type battery.

First, the total volume in the battery can, the volume of the wound electrode assembly, and the volume of the rest of the components (spacers, tabs, etc.) were calculated. Next, the volume of excess space was calculated using the following Eq. 1, and the ratio of the excess space was also calculated using the following Eq. 2.

[Eq. 1]

$$\text{Volume of excess space} = \text{Total internal volume of the battery can} - (\text{Volume of the wound electrode assembly} + \text{Volume of the rest of the components})$$

[Eq. 2]

$$\text{Ratio of excess space} = \text{Volume of excess space}/\text{Total internal volume of the battery can}$$

TABLE 14

| Shape | Size | Total internal volume of battery can | Volume of wound electrode assembly | Volume of the rest of the components | Volume and ratio of excess space |
|---|---|---|---|---|---|
| Cylindrical | 18650 | 14.4 mL | 12.7 mL | 0.3 mL | 1.4 mL, Approx. 10% |
| Prismatic | 553450 | 8.0 mL | 6.6 mL | 0.3 mL | 1.2 mL, Approx. 15% |
| Prismatic | 553436 | 5.8 mL | 4.8 mL | 0.3 mL | 0.7 mL, Approx. 12% |
| Laminate | 383562 | 5.6 mL | 5.3 mL | 0.2 mL | 0.1 mL, Approx. 2% |

Although the results shown in Table 14 were obtained with the above-described batteries, it was found that the ratio of excess space in cylindrical batteries was approximately from 6% to 15%, that in prismatic batteries was approximately from 10% to 20%, and that in laminate batteries was approximately from 1% to 8% when the ratios of excess space were calculated for commercially available batteries. Thus, greater excess space exists in the order shown by the following Eq. 3. It should be noted that the excess space in the lithium-ion batteries for HEV (hybrid electric vehicle) that are currently under development tends to be greater than them, but the same tendency exists as the order of excess space.

[Eq. 3]

Prismatic battery > Cylindrical battery >> Laminate battery

Here, it is possible to impregnate excess electrolyte in the excess space, and it becomes possible to supply electrolyte to the interior of electrodes through the porous layer between the electrodes and the separator by impregnating excess electrolyte therein as in the present invention. Therefore, the greater the excess space is, the greater the amount of the impregnated excess electrolyte is, and thereby the longer the battery cycle life will be. For this reason, the advantageous effects of the present invention are exhibited to a greater degree in a prismatic battery or a cylindrical battery, which have greater excess space.
The laminate battery has a soft case, so it can cope with the change of battery shape to a certain degree according to the expansion and shrinkage of the electrodes. However, since the amount of electrolyte is determined to a certain degree at the electrolyte impregnating step at the initial manufacturing stage (i.e., the amount of the excess electrolyte cannot be made very large), it is believed that the effect of the present invention is less significant in the laminate battery than the cylindrical and prismatic batteries.

It should be noted that, by repeating the compression of the separator because of the electrode expansion during charge and the associated discharge of the electrolyte outside the wound assembly, the amount of the electrolyte within the electrode assembly tends to become insufficient due to diffusion controlling. In the present configuration, however, the speed of permeation and diffusion is fast, and the electrolyte that has been released outside the system can permeate and diffuse into the interior of the battery relatively quickly. Therefore, it is believed that sufficient advantageous effects can be obtained even with the batteries containing a small amount of excess electrolyte, such as laminate batteries.

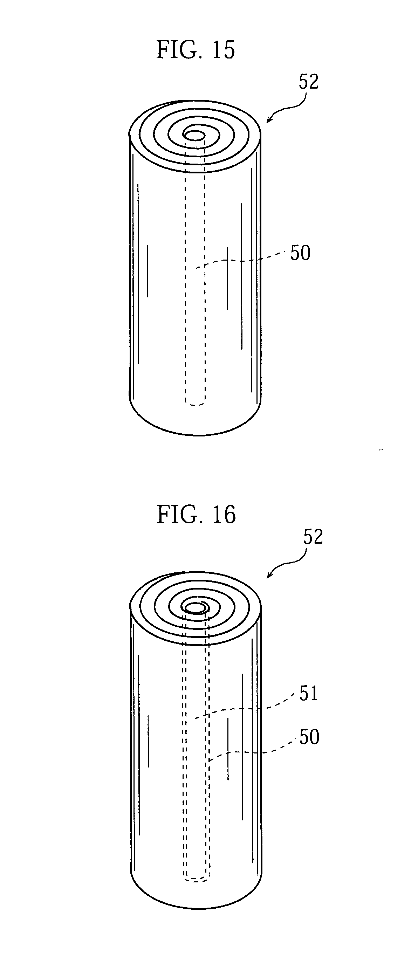

When the cylindrical battery is compared to the prismatic battery and the laminate battery, the prismatic battery and so forth do not have a space that has been provided intentionally in the innermost portion of the battery and the portion in which the excess electrolyte exists concentrates within the top and bottom portions of the wound electrode assembly, so the edge face of the porous layer comes into contact with the excess electrolyte more easily. On the other hand, for the reason associated with the winding, the cylindrical battery has an insertion and deinsertion space 50 for a winding jig existing at the central portion, as illustrated in Fig. 15. This space 50 is an excess space in which excess electrolyte can exist, so a considerable amount of electrolyte is necessary to make the electrolyte come into contact with the top and bottom portions of the wound electrode assembly 52. Moreover, the top and bottom portions of the wound electrode assembly 52 may be immersed in the electrolyte depending on the orientation of the battery, but basically, only one portion or one side of the wound electrode assembly 52 is immersed in the electrolyte, so the electrolyte absorption effect resulting from the present configuration is lessened. In such respect, the prismatic battery or the laminate battery may exhibit the effects of the present invention more sufficiently than the cylindrical battery.

However, even with the cylindrical battery, it is possible to make a configuration such that the present advantageous effects can be exhibited sufficiently by reducing the space volume of the innermost portion with a smaller diameter winding jig or by, for the purpose of reducing this volume, inserting a substance 51 that is not involved in the battery reactions into the space 50, as illustrated in Fig. 16, to reduce the excess space.

Moreover, it is desirable from the above-described concept that the amount of electrolyte within the battery be greater; however, when considering an increased battery capacity and the risk of electrolyte leakage resulting from the presence of a large amount of electrolyte, it is desirable that the the amount of electrolyte be 8.00 cc/Ah or less, based on the total amount inside the battery case, even when the largest one of the batteries that are currently available in the market is taken into consideration.

[Miscellaneous]

(1) As described above, the degree of the present advantageous effects may vary depending on the shape of the battery. In addition, as described previously, the separator is inferior in electrolyte permeability and dispersibility along TD, and the wound electrode assembly is limited to having electrolyte permeation paths from the winding top and bottom portions, so it may be said that the battery system is most inefficient in terms of permeation and diffusion of the electrolyte.

Currently, the surface irregular portions of the electrode surface become smaller because of the increase of electrode filling density for an increased battery capacity, and permeation and diffusion of the electrolyte tend to be difficult to occur by capillary action. Moreover, in a higher power electrode, although the electrode has a lower filling density than that in consumer batteries, the battery size tends to be larger, such as that for HEVs, in order to provide sufficient output power, and the electrolyte tends to be difficult to permeate and diffuse because of the increases in electrode width and winding length. Accordingly, it is believed that the present configuration is effective for the battery system that uses a wound electrode assembly, particularly for the batteries of a high capacity type in which the filling density is high and those of a high power type in which the electrode width is wide. It is also believed that the invention is suitable for the batteries for applications in which the charge-discharge operation is performed at a relatively high rate since the speed of electrolyte absorption for electrolyte and the speed of permeation and diffusion of electrolyte dramatically improve. Specifically, the details are as follows.

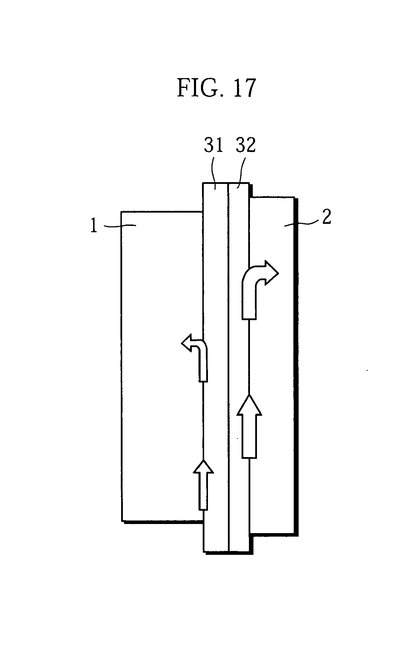

When the results obtained in the foregoing various experiments are put together, the preliminary experiment 2 has shown that the permeation and diffusion paths for electrolyte passing through the space along the separator TD cannot meet the expectation sufficiently, and in addition, the preliminary experiment 3 has shown that the permeation and diffusion paths passing through the electrode surfaces cannot meet the expectation sufficiently as the effect. Therefore, the most promising permeation and diffusion paths for electrolyte into the electrodes are the paths along the gaps between the separator 31 and the positive and negative electrodes 1 and 2, as illustrated in Fig. 17, and by newly providing the porous layer 32, which serves as the permeation and diffusion path the electrolyte, it becomes possible to improve the permeability and dispersibility of the electrolyte into the positive and negative electrodes 1 and 2 dramatically. Thus, the present invention is particularly effective for the high capacity type batteries in which the filling density is high, the high power type batteries in which the electrode width is wide, or the batteries for applications in which the charge-discharge operation is performed at a relatively high rate.

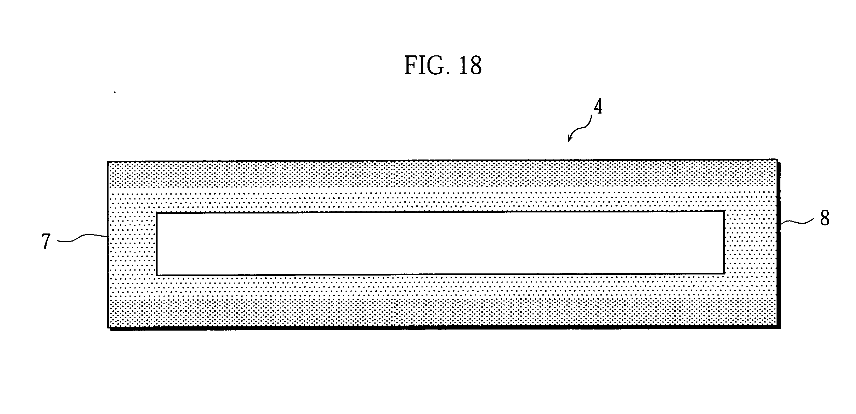

Although the permeation and diffusion into an electrode is shown in Fig. 1, it has been found from the analysis for further details that they are considered in the condition as shown in Fig. 18 (the portion in which the degree of permeation of electrolyte is high is depicted dark in Fig. 18). Specifically, since winding tension is loose at the innermost portion 7 and the outermost portion 8 and there exits a level difference between the coated surface and the non-coated portion, the electrolyte tends to permeate and diffuse easily along the gap. Here, the permeation and diffusion along MD of the separator is added thereto, and the electrolyte permeates therein to a certain extent. It is believed that the rest of the portion is subjected to the permeation and diffusion of electrolyte through the paths shown in Fig. 17. In the case where an actual battery is disassembled as well, shades of color are observed the portion in which the electrolyte has permeated, whereby the portion in which the electrolyte has permeated only in the surface and the portion in which it has permeated in the interior of the electrode can be clearly distinguished. It is believed that this agrees with the phenomenon observed in the preliminary experiment 3.

(2) The present advantageous effects are generally the configurations for promoting the permeation and diffusion in a transverse direction of the electrode, and by combining it with a configuration for promoting the permeation and diffusion in the inward direction of the electrode, the function can be exhibited more effectively. In particular, the negative electrode active material, graphite, tends to become a mirror surface body by pressure-rolling, and the electrode surface is put in a condition such that the electrolyte does not permeate therein easily. Therefore, by performing a treatment such as to form surface irregularities on the electrode surface, a treatment of using active materials with differing particle sizes and shapes, and the like, it is possible to accelerate the permeation and diffusion into the interior in a supplementary manner, and with combinations of them, it is possible to expect improvements in the electrolyte permeability.

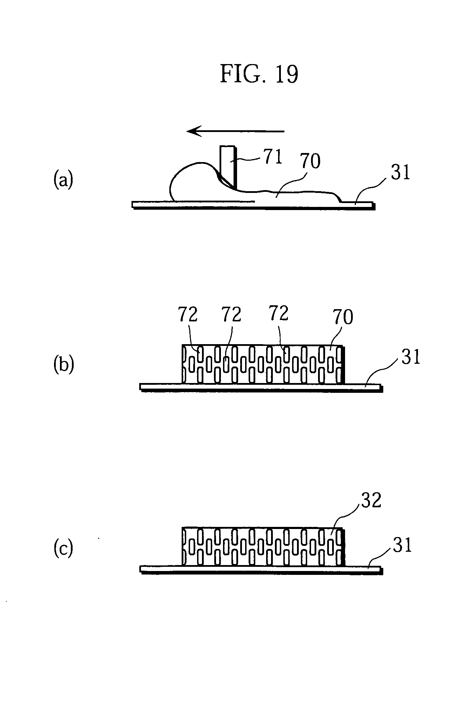

(3) The method for preparing the porous layer made of a resin is not limited to the method described in the best mode. As illustrated in Figs. 19(a) to (c), it is also possible to use a method similar to the Loeb-Sourirajan method. Specifically, first, a cast solution 70 containing a resinous material made of polyamide, polyamideimide is applied onto a surface of the separator 31 with a squeegee 71 or the like, as illustrated in the figure (a). Thereafter, as illustrated in the figure (b), this is immersed in a solution containing water. Thus, water 72 enters the cast solution 70, and the interior of the film is separated and solidified. In this process, in order to prevent the solvent concentration in water from being considerably different between the initial stage and the final stage, it is desirable to use a manufacturing method in which the separator is immersed in solutions having different solvent concentrations (water + solvent) in sequence so that the solvent is gradually removed. Thereafter, as illustrated in the figure (c), the separator is taken out of the water and dried, whereby a porous layer 32 is formed on a surface of the separator 31.

The porous layer made of resin is not limited to the above-mentioned polyamide, but other resinous materials such as polyamideimide and polyimide may be used. The water-soluble polar solvent used when preparing the porous layer is not limited to N-methyl-2-pyrrolidone but other solvents such as N,N-dimethylformamide and N,N-dimethylacetamide may also be used.

(4) The manufacturing methods for the porous layer made of inorganic microparticles that is to be formed on the separator are not limited to die coating and dip coating, and other methods such as gravure coating, transfer coating, and spray coating may be adopted. The manufacturing methods for the porous layer comprising inorganic microparticles that is to be formed on an electrode are not limited to the reverse method, and other methods such as gravure coating may be used.

The inorganic microparticles of the porous layer are not limited to the $TiO_2$, but may be alumina, zirconia, or the like.

(5) The use of the porous layer made of a resin has the advantage that a more reliable battery can be produced because it has the strength and bondability enough to withstand the processing of the battery. On the other hand, the use of the porous layer made of inorganic microparticles has the advantage that the diffusion of electrolyte into electrodes becomes smoother because it can provide more pores in the porous layer and the electrolyte permeability improves further.

(6) The thicknesses of the separators (the thicknesses of the separators themselves for those in which the porous layer is provided on the separator) were from 12 μm to 23 μm in the foregoing embodiments, but further thickness reduction is possible although it may depend on the end-of-charge voltage.

(7) The invention is not limited to the structure in which the porous layer is formed on the separator as described in the best mode, but the porous layer may be formed on a surface of the positive electrode as described in the preliminary experiment 3 and the third embodiment in the embodiments. Furthermore, the porous layer may be formed on a surface of the negative electrode or on surfaces of the positive and negative electrodes, or alternatively, it is also possible to employ a configuration in which the porous layer is prepared separate from the positive and negative electrodes and the separator and the resultant layer is disposed between the separator and the electrodes. An example of the method for preparing the porous layer separately from the positive and negative electrodes and the separator may be a method in which a porous layer is formed on a surface of a glass and the resultant layer is peeled off from the glass, unlike the above-described method similar to the Loeb-Sourirajan method, in which a porous layer is formed on a surface of the separator.

It should be noted that when forming the porous layer on the separator, the porous layer may be formed either on one side of or on both sides of the separator, as described above. However, when the porous layer is formed on both sides, the separator thickness may become large and the battery capacity may decrease. For this reason, it is desirable to prevent the battery capacity decrease by means of forming the porous layer on only one side of the separator or reducing the thickness of a portion of the porous layer that is less required.

In addition, when forming the porous layer on the separator, it is preferable that the width of the separator be wider than the width of the porous layer. The reason is that, with such a configuration, the contact area between the separator and the electrolyte existing in the excess space in the battery can becomes large, so the permeation and diffusion into the interior of the electrodes from the top and bottom portions of the wound electrode assembly can be promoted further. Taking these things into consideration, a greater effect of permeation and diffusion of the electrolyte may be expected when the porous layer is formed on the separator than when the porous layer is formed on an electrode (the positive electrode or the negative electrode).

(8) The thickness (the total thickness when two layers are provided) of the porous layer is set at 4 μm in all the foregoing embodiments, but it is not intended to be limited to this thickness. However, if the thickness of the porous layer is made too small, the permeation and diffusion paths for electrolyte cannot exhibit their effects fully. On the other hand, if the thickness of the porous layer is made too large, the volume occupied by the components that are not directly involved in electric power generation is increased, so the demands for an increased battery capacity cannot be met and moreover, deteriorations in the load characteristics and energy density of the battery may be caused. Taking these things into consideration, it is preferable that the total thickness of the porous layer be controlled to be from 1 $\mu$m to 5 $\mu$m, particularly from 1 $\mu$m to 3 $\mu$m. It should be noted that the term the "total thickness of the porous layer" refers to the thickness of a porous layer when the porous layer is provided only between the separator and the positive electrode or between the separator and the negative electrode, or the total thickness of both porous layers when the porous layers are provided between the separator and both the positive and negative electrodes.

(9) When the porous layer is made of inorganic microparticles, it is desirable that the inorganic microparticles be bonded to one another appropriately by a binder so that the excess space in which the electrolyte permeates can exist therein, in order to enhance the electrolyte absorbency for electrolyte. To achieve this, it is preferable that the concentration of the binder with respect to the inorganic microparticles be 30 mass % or less, more preferably 20 mass % or less, or most preferably less than 10 mass %.

(10) In the foregoing embodiments, the experiments were conducted with end-of-charge voltages of 4.38 V and 4.40 V (positive electrode potentials versus the potential of the lithium reference electrode of 4.48 V and 4.50 V, respectively). However, according to a study carried out by the present inventors, it has been found that it is preferable that porous layers be provided between the separator and the positive and negative electrodes when the end-of-charge voltage is 4.30 V or higher, and that in particular, it is preferable that porous layers exist between the separator and the positive and negative electrodes especially when the end-of-charge voltage is 4.35 V, more preferably 4.40 V or higher.

(11) The positive electrode active material is not limited to lithium cobalt oxide, but may of course be other materials such as olivine-type lithium phosphate compound ($LiFePO_4$), spinel-type lithium manganese oxide ($LiMn_2O_4$), lithium-nickel composite oxide represented by lithium nickel oxide ($LiNiO_2$), lithium-transition metal composite oxide represented as $LiNi_xCo_yMn_zO_2$ where $x + y + z = 1$, and other olivine-type phosphate compound, as well as mixtures thereof.

(12) The method for mixing the positive electrode mixture is not limited to the above-noted mechanofusion method. Other possible methods include a method in which the mixture is dry-blended while milling it with a Raikai-mortar, and a method in which the mixture is wet-mixed and dispersed directly in a slurry.

(13) The negative electrode active material is not limited to graphite as described above. Various other materials may be employed, such as coke, tin oxides, metallic lithium, silicon, and mixtures thereof, as long as the material is capable of intercalating and deintercalating lithium ions.

(14) The lithium salt in the electrolyte is not limited to $LiPF_6$, and various other substances may be used, including $LiBF_4$, $LiN(SO_2CF_3)_2$, $LiN(SO_2C_2F_5)_2$, $LiPF_{6-x}(C_nF_{2n+1})_X$ (wherein $1 < x < 6$ and $n = 1$ or $2$), which may be used either alone or in combination. The concentration of the lithium salt is not particularly limited, but it is preferable that the concentration of the lithium salt be restricted in the range of from 0.8 moles to 1.5 moles per 1 liter of the electrolyte. The solvents for the electrolyte are not particularly limited to ethylene carbonate (EC) and diethyl carbonate (DEC) mentioned above, and preferable solvents include carbonate solvents such as propylene carbonate (PC), $\gamma$-butyrolactone (GBL), ethyl methyl carbonate (EMC), and dimethyl carbonate (DMC). More preferable is a combination of a cyclic carbonate and a chain carbonate.

(15) The present invention may be applied not only to liquid-type batteries but also to gelled polymer batteries. In this case, usable examples of the polymer material include polyether-based solid polymer, polycarbonate solid polymer, polyacrylonitrile-based solid polymer, oxetane-based polymer, epoxy-based polymer, and copolymers or cross-linked polymers comprising two or more of these polymers, as well as PVDF. Any of the above examples of polymer material may be used in combination with a lithium salt and a non-aqueous electrolyte to form a gelled solid electrolyte.

[INDUSTRIAL APPLICABILITY]

The present invention is applicable not only to driving power sources for mobile information terminals such as mobile telephones, notebook computers and PDAs but also to large-sized batteries for, for example, in-vehicle power sources for electric automobiles or hybrid automobiles.

[BRIEF DESCRIPTION OF THE DRAWINGS]

[Fig. 1] Fig. 1 is an explanatory view (exploded view of an electrode) illustrating the permeation condition of the electrolyte in an intermediate stage of filling the electrolyte in a cylindrical battery.
[Fig. 2] Fig. 2 is a graph showing the change over time of electrolyte absorption height of the cylindrical battery.
[Fig. 3] Fig. 3 is an explanatory view illustrating how an electrolyte absorption test for a separator is performed.
[Fig. 4] Fig. 4 is a schematic view of an olefin-based separator.
[Fig. 5] Fig. 5 is a photograph of an olefin-based separator, observed with an electron microscope.
[Fig. 6] Fig. 6 is an explanatory view illustrating the concept of permeation and diffusion of an electrolyte in a separator on which a porous layer is stacked.
[Fig. 7] Fig. 7 is an explanatory view illustrating how an electrolyte absorption test for an electrode is performed.
[Fig. 8] Fig. 8 is a graph illustrating the cycle performance of Batteries A1 and A2 of the invention and Comparative Batteries Z1 and Z2.
[Fig. 9] Fig. 9 is an explanatory view illustrating how the electrolyte diffuses during charge and discharge in a conventional battery.
[Fig. 10] Fig. 10 is an explanatory view illustrating how the electrolyte diffuses during charge and discharge in a battery according to the present invention.
[Fig. 11] Fig. 11 is a graph illustrating the cycle performance of Battery B of the invention and Comparative Batteries Z1 and Z2.
[Fig. 12] Fig. 12 is a graph illustrating the cycle performance of Battery C of the invention and Comparative Battery Y.
[Fig. 13] Fig. 13 is a graph illustrating the cycle performance of Batteries D1 and D2 of the invention and Comparative Battery X.
[Fig. 14] Fig. 14 is a graph illustrating the cycle performance of Battery F of the invention and Comparative Battery V.
[Fig. 15] Fig. 15 is a perspective view illustrating a wound electrode assembly of a cylindrical battery.
[Fig. 16] Fig. 16 is a perspective view illustrating an improved wound electrode assembly of a cylindrical battery.
[Fig. 17] Fig. 17 is an explanatory view illustrating the concept of the permeation and diffusion paths for electrolyte.
[Fig. 18] Fig. 18 is an explanatory view illustrating the concept of how the electrolyte permeates and diffuses into an electrode.
[Fig. 19] Fig. 19 is a process drawing illustrating a flow of manufacturing a resin coated separator according to a Loeb-Sourirajan method.
[Fig. 20] Fig. 20 is a graph illustrating the relationship between potential and change in the crystal structure of lithium cobalt oxide.

[DESCRIPTION OF REFERENCE NUMERALS]

1      positive electrode
2      negative electrode
31     separator
32     porous layer

**Claims**

1. A non-aqueous electrolyte battery comprising: an electrode assembly comprising a positive electrode having a positive electrode active material layer, a negative electrode having a negative electrode active material layer, and a separator interposed between the electrodes; a non-aqueous electrolyte that is supplied to the electrode assembly; and a battery case for accommodating the electrode assembly and the non-aqueous electrolyte, wherein the separator has two directional properties, one of which being MD and the other one being TD having a less non-aqueous electrolyte permeability than that in the MD, and the non-aqueous electrolyte is supplied to the electrode assembly primarily along the TD, the non-aqueous electrolyte battery

   **characterized in that**:

   a porous layer is disposed between the separator and at least one electrode of the positive and negative electrodes, the porous layer having a non-aqueous electrolyte permeability higher than that in the TD; an excess electrolyte is contained in at least a portion of the battery case internal space that is other than the electrode assembly; and the excess electrolyte and at least a portion of the porous layer are in contact with each other.

2. The non-aqueous electrolyte battery according to claim 1, wherein the porous layer is formed on at least one surface of the separator.

3. The non-aqueous electrolyte battery according to claim 1, wherein the porous layer is formed on a surface of at least one of the electrodes of the positive and negative electrodes.

4. The non-aqueous electrolyte battery according to claim 1, wherein the electrode assembly is a wound electrode assembly in which the positive and negative electrodes and the separator are wound together.

5. The non-aqueous electrolyte battery according to claim 4, wherein the battery case has a cylindrical shape or a prismatic shape.

6. The non-aqueous electrolyte battery according to claim 1, wherein the porous layer comprises a binder and microparticles of at least one inorganic material selected from the group consisting of alumina and titania.

7. The non-aqueous electrolyte battery according to claim 1, wherein the porous layer comprises at least one resinous material selected from the group consisting of polyamide and polyamideimide.

8. The non-aqueous electrolyte battery according to claim 1, wherein, when the positive electrode is charged to 4.40 V or higher versus the potential of the lithium reference electrode, the porous layer is formed on a surface of the electrode having a greater volumetric change ratio during charge and discharge.

9. The non-aqueous electrolyte battery according to claim 8, wherein the electrode having a greater volumetric change ratio during charge and discharge is the negative electrode.

10. The non-aqueous electrolyte battery according to claim 9, wherein the negative electrode active material layer comprises a negative electrode active material comprising graphite as a main component.

11. The non-aqueous electrolyte battery according to claim 9, wherein the porous layer is also disposed between the positive electrode and the separator.

12. The non-aqueous electrolyte battery according to claim 1, wherein, when the positive electrode is charged to 4.40 V or higher versus the potential of the lithium reference electrode, the porous layer is formed on a surface of the separator, the surface corresponding to the electrode having a greater volumetric change ratio during charge and discharge.

13. The non-aqueous electrolyte battery according to claim 12, wherein the electrode having a greater volumetric change ratio during charge and discharge is the negative electrode.

14. The non-aqueous electrolyte battery according to claim 13, wherein the negative electrode active material layer comprises a negative electrode active material comprising graphite as a main component.

**15.** The non-aqueous electrolyte battery according to claim 13, wherein the porous layer is also disposed between the positive electrode and the separator.

**16.** The non-aqueous electrolyte secondary battery according to claim 1, wherein the positive electrode active material layer comprises a positive electrode active material containing at least lithium cobalt oxide containing aluminum or magnesium in solid solution, and zirconium is firmly adhered to the surface of the lithium cobalt oxide.

**17.** A negative electrode for a non-aqueous electrolyte battery, disposed opposite a positive electrode across a separator having two directional properties, one of which being MD and the other one of which being TD having a less non-aqueous electrolyte permeability than that in the MD, wherein the non-aqueous electrolyte permeates primarily along the TD, the negative electrode **characterized in that**:

a porous layer having a higher non-aqueous electrolyte permeability that in the TD is formed on a surface thereof.

**18.** A positive electrode for a non-aqueous electrolyte battery, disposed opposite a negative electrode across a separator having two directional properties, one of which being MD and the other one of which being TD having a less non-aqueous electrolyte permeability than that in the MD, wherein the non-aqueous electrolyte permeates primarily along the TD, the positive electrode **characterized in that**:

a porous layer having a higher non-aqueous electrolyte permeability that in the TD is formed on a surface thereof.

**19.** A separator for a non-aqueous electrolyte battery, disposed between a positive electrode and a negative electrode, the separator having two directional properties, one of which being MD and the other one of which being TD having a less non-aqueous electrolyte permeability than that in the MD, wherein the non-aqueous electrolyte permeates primarily along the TD, the separator **characterized in that**:

the separator comprises an olefinic polymer, and a porous layer having a higher non-aqueous electrolyte permeability that in the TD is formed on a surface of at least one side thereof.

**20.** The non-aqueous electrolyte battery according to claim 19, wherein the porous layer is formed on surfaces of both sides thereof.

FIG. 1

FIG. 2

## FIG. 3

## FIG. 4

FIG. 5

FIG. 6

# FIG. 7

## FIG. 8

# FIG. 9
## Prior Art

(a)                    (b)                    (c)

EP 1 947 710 A1

FIG. 10

(a)   (b)   (c)

31 32 20

2

1

# FIG. 11

EP 1 947 710 A1

## FIG. 12

EP 1 947 710 A1

FIG. 13

EP 1 947 710 A1

FIG. 14

FIG. 15

FIG. 16

FIG. 17

FIG. 18

## FIG. 19

(a)

(b)

(c)

## FIG. 20

POTENTIAL OF LITHIUM
REFERENCE ELECTRODE

**INTERNATIONAL SEARCH REPORT**

| International application No. |
|---|
| PCT/JP2006/318498 |

A. CLASSIFICATION OF SUBJECT MATTER
*H01M2/16(2006.01)i, H01M4/02(2006.01)i, H01M4/48(2006.01)i, H01M4/58 (2006.01)i, H01M4/62(2006.01)i, H01M10/40(2006.01)i*

According to International Patent Classification (IPC) or to both national classification and IPC

B. FIELDS SEARCHED

Minimum documentation searched (classification system followed by classification symbols)
H01M2/16, H01M4/02, H01M4/48, H01M4/58, H01M4/62, H01M10/40

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-146190 A  (Tomoegawa Paper Co., Ltd.),<br>20 May, 2004 (20.05.04),<br>Claims 1 to 4; examples<br>& EP 1401037 A2          & US 2004/53122 A1<br>& CN 1495936 A | 1-15,17-20<br>16 |
| X<br>Y | JP 2004-363048 A  (Sony Corp.),<br>24 December, 2004 (24.12.04),<br>Claims 1 to 31; examples<br>(Family: none) | 1-15,17-20<br>16 |
| Y | JP 4-319260 A  (Matsushita Electric Industrial Co., Ltd.),<br>10 November, 1992 (10.11.92),<br>Claims 1, 2; examples<br>(Family: none) | 16 |

| ☒   Further documents are listed in the continuation of Box C. | ☐   See patent family annex. |
|---|---|

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>12 December, 2006 (12.12.06) | Date of mailing of the international search report<br>19 December, 2006 (19.12.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/318498 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-135314 A (Mitsubishi Chemical Corp.), 18 May, 2001 (18.05.01), Claims 1 to 8; Par. No. [0014] (Family: none) | 16 |
| P,X | JP 2006-179432 A (Hitachi Maxell, Ltd.), 06 July, 2006 (06.07.06), Claims 1 to 10; examples (Family: none) | 1,3-15,17,18 |
| P,X | JP 2006-32279 A (Sanyo Electric Co., Ltd.), 02 February, 2006 (02.02.06), Claims 1 to 10; examples & US 2006/19153 A1 & CA 1725549 A | 1,2,4-15,19, 20 |
| P,X | JP 2005-285385 A (Sanyo Electric Co., Ltd.), 13 October, 2005 (13.10.05), Claims 1 to 17; examples & US 2005/214637 A1 & CA 1677715 A | 1,2,4-15,19, 20 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002141042 A
- JP 10006453 A
- JP 10324758 A
- JP 2000100408 A
- JP 2001266949 A
- JP 3371301 B
- JP 7020135 A
- JP 11102730 A
- JP 2005174792 A

**Non-patent literature cited in the description**

- **T. OZUKU.** *J. Electrochem. Soc.,* 1994, vol. 141, 2972